(19)

Europäisches Patentamt
European Patent Office
Office européen des brevets

(11) **EP 4 386 464 A1**

(12) # EUROPEAN PATENT APPLICATION
published in accordance with Art. 153(4) EPC

(43) Date of publication:
**19.06.2024 Bulletin 2024/25**

(21) Application number: **22874837.2**

(22) Date of filing: **26.09.2022**

(51) International Patent Classification (IPC):
**G02B 15/177** [(2006.01)]   **G03B 30/00** [(2021.01)]
**H04N 23/00** [(2023.01)]

(52) Cooperative Patent Classification (CPC):
**G02B 15/177; G03B 30/00; H04N 23/54;
H04N 23/57**

(86) International application number:
**PCT/CN2022/121289**

(87) International publication number:
**WO 2023/051451 (06.04.2023 Gazette 2023/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.09.2021   CN 202111161927**

(71) Applicant: **Huawei Technologies Co., Ltd.
Shenzhen, Guangdong 518129 (CN)**

(72) Inventors:
• YAO, Xiuwen
  **Shenzhen, Guangdong 518129 (CN)**
• ZHANG, Kaiyuan
  **Shenzhen, Guangdong 518129 (CN)**
• YU, Xiaodan
  **Shenzhen, Guangdong 518129 (CN)**

(74) Representative: **MERH-IP Matias Erny Reichl
Hoffmann
Patentanwälte PartG mbB
Paul-Heyse-Strasse 29
80336 München (DE)**

(54) **ZOOM LENS, CAMERA MODULE, AND ELECTRONIC DEVICE**

(57)   Embodiments of this application provide a zoom lens, a camera module, and an electronic device. The zoom lens includes a first lens group, a second lens group, and a third lens group that are sequentially arranged along an optical axis in a direction from an object side to an image side. The first lens group and the third lens group have negative focal power. The second lens group has positive focal power. The first lens group is a fixed group. The second lens group is a zoom group that can move along the optical axis, and moves from a first end close to the object side to a second end close to the image side, to implement optical zoom of the zoom lens from a telescopic end to a wide-angle end. The third lens group is a compensation group that can move along the optical axis. In the first, second, and third lens groups, a total quantity of lenses having focal power is M, a quantity of aspheric surfaces is N, $M \le 7$, and $N \ge 8$. The second lens group includes at least two lenses. At least one of the two lenses has negative focal power. An Abbe number V of the lens is less than or equal to 40. The zoom lens in embodiments of this application has a simple structure, has advantages of miniaturization and thinness, and can perform continuous zoom.

FIG. 1A

**Description**

This application claims priority to Chinese Patent Application No. 202111161927.X, filed with the China National Intellectual Property Administration on September 30, 2021 and entitled "ZOOM LENS, CAMERA MODULE, AND ELECTRONIC DEVICE", which is incorporated herein by reference in its entirety.

**TECHNICAL FIELD**

This application relates to the field of optical imaging, and in particular, to a zoom lens, a camera module, and an electronic device.

**BACKGROUND**

With an increasing requirement for mobile phone photographing and improvement of imaging quality of mobile phone camera modules, a single focal length lens and a digital zoom manner cannot meet a consumer requirement. Most brand flagship mobile phones in the market are equipped with medium- and long-focus cameras (3X/5X), for example, a periscope lens with 10X optical zoom, which is implemented by using two to three wide-angle and long-focus lenses. Optical elements in an existing lens module are usually arranged along a central axis of a lens barrel, and a camera lens includes a relatively large quantity of lenses, resulting in a relatively large length of the camera lens. This is not conducive to implementing miniaturization and thinness, and causes relatively high costs. In addition, currently high magnification optical zoom of a mobile phone is basically "jump" zoom, combined with algorithm-based digital zoom, to implement hybrid optical zoom. As a result, continuous zoom cannot be implemented, and a user requirement cannot be better met.

**SUMMARY**

Embodiments of this application provide a zoom lens, a camera module, and an electronic device. The zoom lens can implement continuous zoom at high magnification by using one lens, includes a relatively small quantity of lenses and has a simple structure. This helps implement miniaturization and thinness, and can reduce costs.

Therefore, the following technical solutions are used in embodiments of this application.

According to a first aspect, an embodiment of this application provides a zoom lens. The zoom lens includes a first lens group, a second lens group, and a third lens group that are sequentially arranged along an optical axis in a direction from an object side to an image side. The first lens group and the third lens group have negative focal power. The second lens group has positive focal power. The first lens group is a fixed group. The second lens group is a zoom group that can move between a first end and a second end along the optical axis. The first end is close to the object side. The second end is close to the image side. The second lens group moves from the first end to the second end, to implement optical zoom of the zoom lens from a telescopic end to a wide-angle end. The third lens group is a compensation group that can move along the optical axis. The compensation group is configured to compensate for an offset of an image plane location to maintain clear imaging. The first lens group and the third lens group each include at least one lens. The second lens group includes at least two lenses. At least one of the two lenses has negative focal power. An Abbe number of the lens having the negative focal power in the second lens group is V. V ≤ 40. Each lens includes two opposite surfaces. At least one of the two surfaces is a lens surface. The lens surface is a curved surface that is convex or concave in an extension direction of the optical axis of the zoom lens. In the first lens group, the second lens group, and the third lens group, a total quantity of lenses having focal power is M, a total quantity of lens surfaces of aspheric surfaces is N, M is an integer less than or equal to 7, and N is an integer greater than or equal to 8.

In the foregoing solution, the zoom lens includes three lens groups. A total quantity of lenses in the three lens groups is less than or equal to 7. A quantity of aspheric surfaces are greater than or equal to 8. A configuration manner of each group of an element and lens focal power is selected, to be specific, the aspheric surface is properly used, and in cooperation with an Abbe number of the at least one lens having the negative focal power in the second lens group, so that the zoom lens obtains high image quality, meets a specific magnification and long-focus requirement, and implement continuous zoom. In addition, the zoom lens includes a small quantity of lenses and has a simple structure. This helps implement miniaturization and thinness, and can reduce costs.

In a possible implementation, the zoom lens further includes a stop. The stop is located between the second lens group and the third lens group. The stop can reduce stray light in the zoom lens to improve imaging quality. The stop may be an aperture stop and/or a field stop. In addition, the stop may alternatively be located in another location when a working requirement is met.

In a possible implementation, a focal length of the second lens group is 12, a focal length of the telescopic end of the zoom lens is ft, and $0.10 \leq |f2/ft| \leq 0.5$ is satisfied. A value range of the focal power of the second lens group is limited, so that imaging quality of a system after zooming can be improved.

In a possible implementation, a focal length of the third lens group is 13, the focal length of the telescopic end of the zoom lens is ft, and $0.10 \leq |f3/ft| \leq 0.5$ is satisfied. A value range of the focal power of the third lens group is limited, so that imaging quality of the system after zooming can be improved.

In a possible implementation, a value range of a ratio TTL/ft of the total track length TTL of the zoom lens to the focal length ft of the telescopic end of the zoom lens is $0.8 \leq$ TTL/ft $\leq 1.2$. A value range of a compression ratio of the system, in other words, the value range of the ratio TTL/ft, a zoom capability of the system can be improved. The TTL/ft may be one of 0.8, 0.9, 1.0, 1.1, and 1.2. Certainly, another value may be selected for the TTL/ft according to an actual requirement.

In a possible implementation, a value range of a ratio IH/ft of a maximum image height IH of the zoom lens to the focal length ft of the telescopic end of the zoom lens is $0.02 \leq$ IH/ft $\leq 0.2$. In this way, the zoom capability of the system can be improved. The IH/ft may be one of 0.02, 0.05, 0.1, 0.15, and 0.2. Certainly, another value may be selected for the IH/ft according to an actual requirement.

In a possible implementation, the first lens group includes a first lens and a second lens. The second lens group includes a third lens and a fourth lens. The third lens group includes a fifth lens and a sixth lens. M = 6. The first lens, the third lens, and the fifth lens have positive focal power. The second lens, the fourth lens, and the sixth lens have negative focal power. Lens surfaces of the first lens, the third lens, the fourth lens, the fifth lens, and the sixth lens are aspheric surfaces. N = 10. A value range of an aperture value F# of the zoom lens is $2.8 \leq$ F# $\leq 5$. The image quality of the system after zooming is improved by using focal power matching, and zooming continuity is ensured.

In a possible implementation, the first lens group includes a first lens. The second lens group includes a second lens and a third lens. The third lens group includes a fourth lens and a fifth lens. M = 5. The first lens, the third lens, and the fifth lens have negative focal power. The second lens and the fourth lens have positive focal power. Lens surfaces of the second lens, the third lens, the fourth lens, and the fifth lens are aspheric surfaces. N = 8. A value range of an aperture value F# of the zoom lens is $2.8 \leq$ F# $\leq 5$. The image quality of the system after zooming is improved by using focal power matching, and zooming continuity is ensured.

In a possible implementation, the first lens group includes a first lens and a second lens. The second lens group includes a third lens and a fourth lens. The third lens group includes a fifth lens. M = 5. The first lens and the third lens have positive focal power. The second lens, the fourth lens, and the fifth lens have negative focal power. Lens surfaces of the first lens, the third lens, the fourth lens, and the fifth lens are aspheric surfaces. N = 8. A value range of an aperture value F# of the zoom lens is $3.5 \leq$ F# $\leq 5.75$. The image quality of the system after zooming is improved by using focal power matching, and zooming continuity is ensured.

In a possible implementation, the first lens group includes a first lens and a second lens. The second lens group includes a third lens and a fourth lens. The third lens group includes a fifth lens, a sixth lens, and a seventh lens. M = 7. The first lens, the third lens, the fifth lens, and the seventh lens have positive focal power. The second lens, the fourth lens, and the sixth lens have negative focal power. Lens surfaces of the first lens, the third lens, the fourth lens, the fifth lens, and the sixth lens are aspheric surfaces. N = 10. A value range of an aperture value F# of the zoom lens is $2.93 \leq$ F# $\leq 5.5$. The image quality of the system after zooming is improved by using focal power matching, and zooming continuity is ensured.

In a possible implementation, the lenses in the zoom lens are symmetrical along a first axis of symmetry and a second axis of symmetry separately. The first axis of symmetry is perpendicular to the second axis of symmetry. A maximum size of the lens in the zoom lens in an extension direction of the first axis of symmetry is less than a maximum size in an extension direction of the second axis of symmetry. In this implementation, an 1-cut lens may be used, that is, the lens may be a part of a circle. Specifically, arc-shaped edges on two opposite sides of the circle may be cut along the second axis of symmetry, namely, in a diameter direction, to form a straight line. The other two sides of the circle are still arc-shaped edges, so that a maximum size of the lens in a direction of the first axis of symmetry, like a height direction, is less than a maximum size in a direction of the second axis of symmetry, like a width direction, reducing a module height. For example, a vertical height is less than 6 mm.

According to a second aspect, an embodiment of this application provides a camera module. The camera module includes a photosensitive element and the zoom lens provided in the first aspect. The photosensitive element is located on an image side of the zoom lens. The zoom lens is configured to receive light reflected by a photographed object and cast the light to the photosensitive element. The photosensitive element is configured to convert the light into an image signal.

In a possible implementation, the camera module further includes a prism or a reflector, configured to change a direction of an optical path, so that light passing through the prism or the reflector may propagate in an extension direction of an optical axis of the zoom lens. In this way, an optical path deflection is formed, and a periscope optical path is implemented. For example, a plurality of lenses of the zoom lens may be arranged in a thickness direction of an electronic device such as a mobile phone. In this way, a thickness of the mobile phone is greater than a sum of thicknesses of the plurality of lenses. After the prism or the reflection lens is added, the plurality of lenses of the zoom lens may be

EP 4 386 464 A1

arranged in an extension direction of a plane on which the mobile phone is located. The prism or the reflection lens may change incident light perpendicular to a thickness direction of the mobile phone to be arranged in an extension direction of a plate surface of the mobile phone. The light may propagate in the extension direction of the optical axis of the zoom lens through proper setting.

According to a third aspect, an embodiment of this application provides an electronic device. The electronic device includes a driver chip and the camera module provided in the second aspect. The driver chip is configured to drive the camera module.

**BRIEF DESCRIPTION OF DRAWINGS**

The following briefly describes accompanying drawings that need to be used in descriptions of embodiments or a conventional technology.

FIG. 1A is a schematic diagram of a structure of a zoom lens at a wide-angle end according to a first embodiment of this application;
FIG. 1B is a schematic diagram of a structure of a zoom lens at a telescopic end according to a first embodiment of this application;
FIG. 1C is a defocus curve diagram of the zoom lens at the wide-angle end shown in FIG. 1A;
FIG. 1D is a transverse chromatic aberration curve diagram of the zoom lens at the wide-angle end shown in FIG. 1A;
FIG. 1E is a distortion curve diagram of the zoom lens at the wide-angle end shown in FIG. 1A;
FIG. 2A is a schematic diagram of a structure of a zoom lens at a wide-angle end according to a second embodiment of this application;
FIG. 2B is a schematic diagram of a structure of a zoom lens at a telescopic end according to a second embodiment of this application;
FIG. 2C is a defocus curve diagram of the zoom lens at the wide-angle end shown in FIG. 2A;
FIG. 2D is a transverse chromatic aberration curve diagram of the zoom lens at the wide-angle end shown in FIG. 2A;
FIG. 2E is a distortion curve diagram of the zoom lens at the wide-angle end shown in FIG. 2A;
FIG. 3A is a schematic diagram of a structure of a zoom lens at a wide-angle end according to a third embodiment of this application;
FIG. 3B is a schematic diagram of a structure of a zoom lens at a telescopic end according to a third embodiment of this application;
FIG. 3C is a defocus curve diagram of the zoom lens at the wide-angle end shown in FIG. 3A;
FIG. 3D is a transverse chromatic aberration curve diagram of the zoom lens at the wide-angle end shown in FIG. 3A;
FIG. 3E is a distortion curve diagram of the zoom lens at the wide-angle end shown in FIG. 3A;
FIG. 4A is a schematic diagram of a structure of a zoom lens at a wide-angle end according to a fourth embodiment of this application;
FIG. 4B is a schematic diagram of a structure of a zoom lens at a telescopic end according to a fourth embodiment of this application;
FIG. 4C is a defocus curve diagram of the zoom lens at the wide-angle end shown in FIG. 4A;
FIG. 4D is a transverse chromatic aberration curve diagram of the zoom lens at the wide-angle end shown in FIG. 4A;
FIG. 4E is a distortion curve diagram of the zoom lens at the wide-angle end shown in FIG. 4A;
FIG. 5A is a schematic diagram of a structure of a zoom lens at a wide-angle end according to a fifth embodiment of this application;
FIG. 5B is a schematic diagram of a structure of a zoom lens at a telescopic end according to a fifth embodiment of this application;
FIG. 5C is a defocus curve diagram of the zoom lens at the wide-angle end shown in FIG. 5A;
FIG. 5D is a transverse chromatic aberration curve diagram of the zoom lens at the wide-angle end shown in FIG. 5A; and
FIG. 5E is a distortion curve diagram of the zoom lens at the wide-angle end shown in FIG. 5A.

**DESCRIPTION OF EMBODIMENTS**

For a better understanding of this application, aspects of this application are described in more detail with reference to embodiments. It should be understood that, these detailed descriptions are merely descriptions of examples of implementations in this application, and are not intended to limit the scope of this application in any manner. In the full text of this specification, the same reference numerals refer to the same elements. The expression "and/or" includes any and all combinations of one or more of the associated listed items.

In addition, it should be noted that, in this specification, the expressions such as "first", "second" and "third" are merely used to distinguish one feature from another feature, and do not represent any limitation to the feature. Therefore, a first lens discussed below may also be referred to as a second lens or a third lens without departing from the teachings of this application.

In the accompanying drawings, for ease of description, a thickness, a size, and a shape of a lens are slightly exaggerated. Specifically, a shape of a spherical surface or an aspheric surface shown in the accompanying drawings is shown by using an example. To be specific, a shape of the spherical surface or the aspheric surface is not limited to the shape of the spherical surface or the aspheric surface shown in the accompanying drawings. The accompanying drawings are merely examples and are not drawn strictly to scale.

In this specification, a paraxial region is a region near an optical axis. If a surface of the lens is a convex surface and a location of the convex surface is not defined, it indicates that the surface of the lens is the convex surface at least in the paraxial region. If a surface of the lens is a concave surface and a location of the concave surface is not defined, it indicates that the surface of the lens is the concave surface at least in the paraxial region. A surface that is of each lens and that is closest to a photographed object is referred to as an object-side surface of the lens. A surface that is of each lens and that is closest to an imaging plane is referred to as an image-side surface of the lens.

It should be further understood that the terms "include", "have", "comprise", and/or "contain" used in this specification indicate existence of a described feature, element, and/or component, but do not exclude existence or addition of one or more other features, elements, components, and/or combinations thereof. In addition, when an expression such as "at least one of" appears after a list of listed features, the entire listed features are modified, rather than an individual element in the list. In addition, when the implementations of this application are described, "may" is used to indicate "one or more implementations of this application". In addition, the term "for example" is used to indicate an example or an example for description.

Unless otherwise limited, all terms (including technical and scientific terms) used in this specification have same meanings as understood usually by a person of ordinary skill in the art to which this application belongs. It should be further understood that, terms (such as those defined in common dictionaries) should be interpreted as having meanings consistent with their meanings in the context of related technologies, and will not be interpreted in an idealized or excessive formal sense, unless expressly defined in this specification.

The following describes in detail acronyms and key terms used in embodiments of this application.

F#: F-number, F-number/aperture value, which is a ratio of a focal length of a camera lens to an entrance pupil diameter of the camera lens. The smaller the aperture value F#, the more light enters in a same unit time. The larger the aperture value F#, the smaller the depth of field and photographed background content will be blurred, which is similar to an effect of a long-focus lens.

EFL: effective focal length, which is an effective focal length of the camera lens.

TTL: total track length, which is a total length from a head of the lens barrel to an imaging plane and a main factor that determines a camera height.

IH: image height. A radius of an imaging circle is a half image height.

FOV: field of view, field angle.

MIC: max image circle, maximum image circle diameter.

BFL: back focal length, back focal length.

MTF: modulation transfer function, modulation transfer function/modulation contrast, which is an evaluation of imaging quality of a system.

Chief ray: chief ray, which is light passing through entrance pupil and exit pupil centers of the system.

CRA: chief ray angle, which is an incident angle of the chief ray, to be specific, an incident angle of the chief ray on an image plane.

ASP: asphere, aspheric surface.

T: tangential, meridian, which is a surface determined by an optical axis and the chief ray.

S: sagittal, sagitta, which is a plane that passes through the chief ray and is perpendicular to the meridian plane.

R: radius of curvature, radius of curvature.

LP: line pair, line pair.

Wide-angle end: wide end, which is a shortest focal length of the lens, namely, a short-focus end. The lens has a largest angle of view and is used to take close shots, especially large-field close shots.

Telescopic end: telescopic end, which is a longest focal length of the lens, namely, the telescopic end. The lens has a smallest angle of view and is used to take long shots, especially partial close-up.

Temperature drift: An offset between an optimal image plane at a temperature and an optimal image plane at a room temperature of the system.

Positive focal power: The lens or a lens group has a positive focal length and an effect of converging light.

Negative focal power: The lens or a lens group has a negative focal length and an effect of diverging light.

Focal power: focal power, a reciprocal of the focal length of the lens.

It should be noted that embodiments in this application and the features in embodiments may be mutually combined in the case of no conflict. This application is described in detail in the following with reference to the accompanying drawings and embodiments.

Existing implementations of camera zoom of a mobile phone may include but are not limited to the following three types:

A first solution with which a periscope long-focus camera is equipped. A multi-camera algorithm is used to zoom, and perform digital zoom relay by using an algorithm, to implement high-magnification hybrid zoom. In this way, a quantity of cameras is relatively large, and the algorithm is complex.

A second solution in which an external telescopic zoom design is used. In this solution, an optical design space is large, and the design is relatively free. However, a size is relatively large, which is not conducive to miniaturization of the mobile phone. During photographing, a lens protrudes from a body. This affects an overall appearance of the mobile phone and is not conducive to water resistance and dust release, consequently reliability is relatively low.

A third solution in which a dual-prism zoom design is used. In this design, a first refraction prism has a lens outside, and a thickness size is relatively large. A size space is limited, and an equivalent focal length distribution range is relatively small.

In the foregoing three solutions, to implement a zoom function, a problem such as a relatively large quantity of lenses and/or a relatively large size of a lens exists. This limits an industry situation of miniaturization, thinness, and high image quality of a future mobile phone lens, and limits competitiveness of a zoom optical system to some extent. In addition, currently high magnification optical zoom of a mobile phone is basically "jump" zoom, combined with algorithm-based digital zoom, to implement hybrid optical zoom. As a result, continuous zoom cannot be implemented and a user requirement cannot be better met.

In view of this, embodiments of this application provide a zoom lens, a camera module, and an electronic device. In a configuration manner of each group of an element and lens focal power, an aspheric surface is properly used, and in cooperation with a lens with specific optical performance in terms of data such as a focal length, a refractive index, a total track length of a lens system, an on-axis thickness, and a radius of curvature, so that a zoom system obtains high image quality, meets a specific magnification and long-focus requirement and can continuously zoom. In addition, a quantity of included lenses is relatively small, and a structure is simple. This helps implement miniaturization and thinness, and can reduce costs. The electronic device may be, for example, a portable device such as a mobile phone, a tablet computer, or a monitor. In addition, an I-cut lens may be used, that is, the lens may be a part of a circle. Specifically, arc-shaped edges on two opposite sides of the circle are cut to a shape of a straight line, along a second axis of symmetry, namely, in a diameter direction. The other two sides of the circle are still arc-shaped edges, so that a maximum size of the lens in a direction of the first axis of symmetry, like a height direction, is less than a maximum size in a direction of the second axis of symmetry, like a width direction, reducing a module height.

The electronic device such as a mobile phone may include a driver chip and a camera module. The driver chip is configured to drive the camera module. The camera module may include a photosensitive element and the zoom lens. A side that is of the zoom lens and that faces an object is an object side of the zoom lens. A side that is of the zoom lens and that forms an image is an image side. The photosensitive element is located on the image side of the zoom lens. The zoom lens is configured to receive light reflected by a photographed object and cast the light to the photosensitive element. The photosensitive element is configured to convert the light into an image signal.

The following describes in detail a specific structure of the zoom lens provided in embodiments of this application. Based on requirements for miniaturization and a continuous zoom capability, embodiments of this application design a miniaturized continuous zoom optical system including a front fixed group, a zoom group, and a compensation group, namely, a zoom lens. The zoom lens may be used in an intelligent terminal for image capturing and video recording, for example, a scenario in which a lens of a portable electronic product like a mobile phone, a tablet computer, or a monitor is used to shoot an external video or photo, including various shooting application scenarios at different magnification and different focal lengths. It may be understood that these embodiments are merely examples. In addition, there are a plurality of implementations in this application.

Specifically, the zoom lens in embodiments of this application includes the front fixed group having negative focal power, namely, a first lens group G1, the zoom group having positive focal power, namely, a second lens group G2, and the compensation group having negative focal power, namely, a third lens group G3. The second lens group G2 moves from the image side to the object side, to implement zoom from a wide-angle end to a telescopic end. In this case, continuous zoom is performed. An optical magnification range/zoom range may be, for example, 1.5x to 2.5X. The third lens group G3 is configured to compensate for an offset of an image plane location, to maintain clear imaging. The offset of the image plane location may be caused by a zoom group in a zoom process or when an external temperature changes. The first lens group G1 and the third lens group G3 each may include at least one lens. The second lens group G2 includes at least two lenses, where there is at least one negative lens (namely, a lens having negative focal power), and an Abbe number V of the negative lens is less than or equal to 40.

Each lens includes two opposite surfaces. At least one of the two surfaces is a lens surface. The lens surface is a curved surface that is convex or concave in an extension direction of an optical axis of the zoom lens, and may participate in imaging and aberration correction. Specifically, light entering the lens is refracted on the lens surface, and an optical path is changed due to a curved-surface shape of the lens surface. In this case, the optical path of the incident light is changed by using the lens surface, so that the incident light may correspondingly generate a convergence or divergence phenomenon, and participate in imaging. Based on a convergence or divergence function sequentially performed by a plurality of lens surfaces in the zoom lens on the incident light, the light may implement optical imaging. The lens surface of the lens may be an aspheric surface or an aspheric surface. In the first lens group G1, the second lens group G2, and the third lens group G3, a total quantity of lenses having focal power is M, a total quantity of lens surfaces of aspheric surfaces is N, M is an integer less than or equal to 7, and N is an integer greater than or equal to 8.

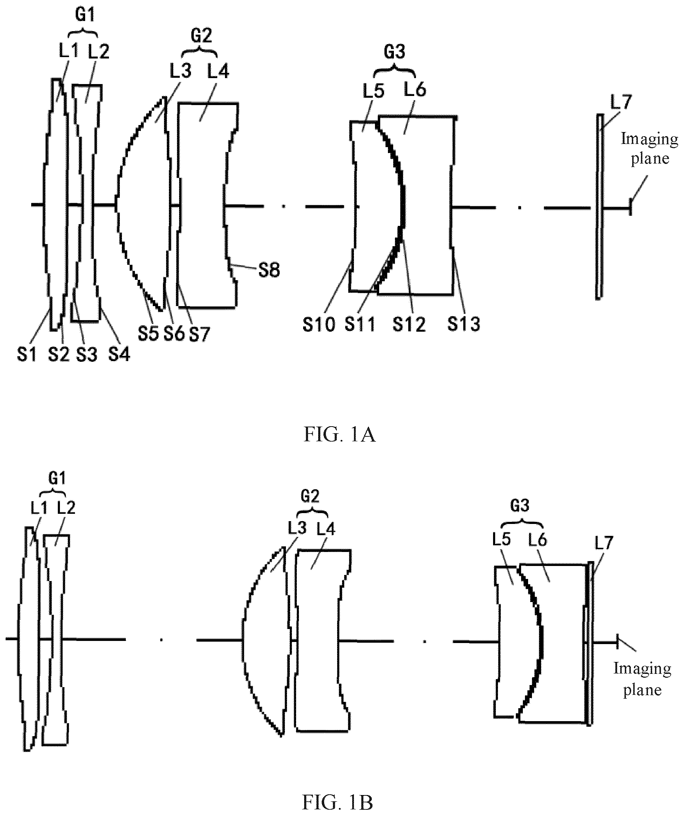

FIG. 1A is a schematic diagram of a structure of a zoom lens at a wide-angle end according to a first embodiment of this application. FIG. 1B is a schematic diagram of a structure of a zoom lens at a telescopic end according to a first embodiment of this application. As shown in FIG. 1A and FIG. 1B, the zoom lens in the first embodiment of this application includes a first lens group G1, a second lens group G2, and a third lens group G3 that are sequentially arranged along an optical axis in a direction from an object side to an image side. In FIG. 1A and FIG. 1B, the object side to an image-side surface are sequentially arranged from left to right. A light filter L7 and an imaging plane are further shown on an image side of the third lens group G3.

The first lens group G1 may be of a two-lens type with negative focal power. The second lens group G2 may be of a two-lens type with positive focal power. The third lens group G3 may be of a two-lens type with negative focal power. Specifically, the first lens group G1 includes a first lens L1 and a second lens L2. The second lens group G2 includes a third lens L3 and a fourth lens L4. The third lens group G3 includes a fifth lens L5 and a sixth lens L6. In other words, a total quantity M of lenses having focal power is 6. The first lens L1, the third lens L3, and the fifth lens L5 have positive focal power. The second lens L2, the fourth lens L4, and the sixth lens L6 have negative focal power. Lens surfaces of the first lens L1, the third lens L3, the fourth lens L4, the fifth lens L5, and the sixth lens L6 are aspheric surfaces. N = 10. A lens surface of the second lens L2 may be a spherical surface. The zoom lens may include 10 aspheric surfaces and two spherical surfaces.

Further, a ratio |f1/ft| of a focal length f1 of the first lens group G1 to a focal length ft of the telescopic end of the zoom lens is 0.74. A ratio |f2/ft| of a focal length f2 of the second lens group G2 to the focal length ft of the telescopic end of the zoom lens is 0.33. An Abbe number V of a lens having the negative focal power in the two-lens second lens group G2, namely, the fourth lens L4, is 19.98. A ratio |f3/ft| of a focal length f3 of the third lens group G3 to the focal length ft of the telescopic end of the zoom lens is 0.724.

Ratios of the lenses to the focal length ft of the telescopic end of the zoom lens may be as follows: A ratio $|f_{L1}/ft|$ of a focal length $f_{L1}$ of the first lens L1 to the focal length ft of the telescopic end of the zoom lens is 0.966. A ratio $|f_{L2}/ft|$ of a focal length $f_{L2}$ of the second lens L2 to the focal length ft of the telescopic end of the zoom lens is 0.4. A ratio $|f_{L3}/ft|$ of a focal length $f_{L3}$ of the third lens L3 to the focal length ft of the telescopic end of the zoom lens is 0.227. A ratio $|f_{L4}/ft|$ of a focal length $f_{L4}$ of the fourth lens L4 to the focal length ft of the telescopic end of the zoom lens is 0.519. A ratio $|f_{L5}/ft|$ of a focal length $f_{L5}$ of the fifth lens L5 to the focal length ft of the telescopic end of the zoom lens is 0.343. A ratio $|f_{L6}/ft|$ of a focal length $f_{L6}$ of the sixth lens L6 to the focal length ft of the telescopic end of the zoom lens is 0.235.

In addition, a value range of an aperture value F# of the zoom lens may be $2.8 \le F\# \le 5$. A ratio TTL/ft of the total track length TTL of the zoom lens to the focal length ft of the telescopic end of the zoom lens may be 0.981. A ratio IH/ft of the maximum image height IH of the zoom lens to the focal length ft of the telescopic end of the zoom lens may be 0.107. In an example, an effective focal length fs of the zoom lens at the wide-angle end is 11.99 mm, and an effective focal length ft of the zoom lens at the telescopic end is 27.99 mm.

The zoom lens may further include a stop (not shown in the figure). The stop is located between the second lens group G2 and the third lens group G3. Specifically, the stop may be disposed close to the third lens group G3, and the stop does not move during zoom of the zoom lens. As shown in FIG. 1A and FIG. 1B, lenses L1 to L6 and the stop of the zoom lens in the first embodiment are sequentially arranged, and surfaces are respectively S1, S2, S3, S4, S5, S6, S7, S8, stop (the stop S9, not shown in the figure), S10, and the like. It should be noted that, only numerals of the surfaces of the lenses L1 to L6 are marked in FIG. 1A, namely, S1, S2, and the like. For numerals of the surfaces of the lenses L1 to L6 in FIG. 1B, refer to FIG. 1A. In other words, the numerals of the surfaces of the lenses L1 to L6 in FIG. 1A and those in FIG. 1B are consistent.

A "center thickness Th" is a distance between a surface and an adjacent downstream surface in an optical axis direction. "The downstream surface" is a surface closer to the image side than the "surface". For example, a center thickness Th of the surface S2 of the first lens is a distance between the surface S2 and the surface S3 in the optical axis direction. A center thickness Th of the surface S5 of the third lens is a distance between the surface S5 and the surface S6 of the fourth lens in the optical axis direction. For example, specific values of a radius of curvature R, a center thickness Th, a refractive index Nd, and an Abbe number Vd of each of the lenses L1 to L6 and the light filter L7, refer to the following Table 1. The second lens group G2 and the third lens group G3 may move in the optical axis direction, to change both a focal length of the entire zoom lens and an air gap between some surfaces, namely, a center thickness Th. D1, D2, D3, and D4 are respectively values of corresponding center thicknesses Th when the zoom lens changes to four different focal lengths. To be specific, when the entire zoom lens has a first focal length, a center thickness Th is D1. When the entire zoom lens has a second focal length, a center thickness Th is D2. When the entire zoom lens has a third focal length, a center thickness Th is D3. When the entire zoom lens has a fourth focal length, a center thickness Th is D4.

**Table 1 Radius of curvature, refractive index, Abbe number, and center thickness in different focal lengths of each lens**

| Group | Lens | R | D1 | D2 | D3 | D4 | Nd | Vd |
|---|---|---|---|---|---|---|---|---|
| G1 | L1 | 17.563 | 0.909 | 0.909 | 0.909 | 0.909 | 1.671338 | 19.24 |
| | | 525.258 | 0.080 | 0.080 | 0.080 | 0.080 | | |
| | | inf | 0.080 | 0.080 | 0.080 | 0.080 | | |
| | | inf | 0.433 | 0.433 | 0.433 | 0.433 | | |
| | L2 | -20.031 | 0.400 | 0.400 | 0.400 | 0.400 | 1.89 | 37.6518 |
| | | 20.437 | 8.154 | 5.659 | 2.464 | 1.000 | | |
| G2 | L3 | 4.488 | 2.134 | 2.134 | 2.134 | 2.134 | 1.544501 | 55.9 |
| | | -12.686 | 0.080 | 0.080 | 0.080 | 0.080 | | |
| | | inf | 0.080 | 0.080 | 0.080 | 0.080 | | |
| | | inf | 0.183 | 0.183 | 0.183 | 0.183 | | |
| | L4 | -15.130 | 1.800 | 1.800 | 1.800 | 1.800 | 1.671338 | 19.24 |
| | | 28.864 | 2.982 | 2.982 | 2.982 | 2.982 | | |
| | | inf | 0.128 | 0.128 | 0.128 | 0.128 | | |
| | | inf | 4.204 | 1.692 | 1.518 | 2.092 | | |
| G3 | L5 | -9.853 | 1.800 | 1.800 | 1.800 | 1.800 | 1.572889 | 41 |
| | | -3.766 | 0.080 | 0.080 | 0.080 | 0.080 | | |
| | L6 | -5.646 | 1.800 | 1.800 | 1.800 | 1.800 | 1.496998 | 81.59 |
| | | 8.613 | 0.263 | 5.268 | 8.638 | 9.528 | | |
| | L7 | inf | 0.210 | 0.210 | 0.210 | 0.210 | 1.516797 | 64.2 |
| | | inf | 1.080 | 1.080 | 1.080 | 1.080 | | |

It should be noted that, in Table 1, a space indicates that there is no specific requirement on a value. "inf" is infinity, and indicates a plane.

In addition, in the first embodiment of this application, all even-order aspheric surface types z may be limited by using but not limited to the following aspheric formula:

$$z = \frac{cr^2}{1 + \sqrt{1 - Kc^2r^2}} + A_4r^4 + A_6r^6 + A_8r^8 + A_{10}r^{10} + A_{12}r^{12}$$

z is a vector height of an aspheric surface, r is a radial coordinate of the aspheric surface, c is vertex curvature of the aspheric surface, K is a quadratic surface constant, and A4, A6, A8, A10, and A12 are aspheric coefficients. A quadratic surface constant and an aspheric coefficient of a surface of each lens in the first embodiment of this application are shown in the following Table 2.

**Table 2 Aspheric coefficient of each lens**

| Aspheric coefficient | | | | | | | | |
|---|---|---|---|---|---|---|---|---|
| | | Type | K | A4 | A6 | A8 | A10 | A12 |
| L1 | S1 | Aspheric surface | 0 | -0.00019 | -7.35E-06 | -4.38E-07 | -3.10E-08 | -1.29E-09 |
| | S2 | Aspheric surface | 0 | -0.00033 | -6.57E-06 | -4.15E-07 | -6.16E-08 | 6.57E-10 |
| L3 | S5 | Aspheric surface | 0 | -0.00045 | -1.46E-05 | -1.03E-07 | 1.68E-08 | -9.41E-09 |
| | S6 | Aspheric surface | 0 | 0.001419 | 3.49E-05 | -1.69E-06 | -3.61E-07 | 1.85E-08 |
| L4 | S7 | Aspheric surface | 0 | 0.002661 | 4.12E-05 | -5.75E-06 | -7.42E-08 | 1.48E-08 |
| | S8 | Aspheric surface | 0 | 0.003975 | 0.000123 | 1.61E-05 | -1.75E-06 | 2.75E-07 |
| L5 | S10 | Aspheric surface | 0 | 0.002885 | -0.000268 | 4.26E-05 | -2.36E-06 | 4.99E-09 |
| | S11 | Aspheric surface | 0 | 0.003372 | -0.00052 | 0.0001939 | -2.23E-05 | 9.32E-07 |
| L6 | S12 | Aspheric surface | 0 | -0.00956 | 0.0003154 | 0.0001769 | -2.89E-05 | 1.39E-06 |
| | S13 | Aspheric surface | 0 | -0.00976 | 0.001218 | -0.000122 | 8.34E-06 | -2.58E-07 |

It can be learned from Table 2 that the zoom lens in the first embodiment of this application includes 10 aspheric surfaces in total. The two surfaces S3 and S4 of L2 are spherical surfaces. A value of the aspheric coefficient is calculated according to the following rules. A value of a first row is used as an example, $-7.35\text{E-}06 = -7.35 \times 10^{-6}$, $-4.38\text{E-}07 = -4.38 \times 10^{-7}$, $-3.10\text{E-}08 = -3.10 \times 10^{-8}$, and $-1.29\text{E-}09 = -1.29 \times 10^{-9}$.

For effect that can be implemented by the zoom lens in the first embodiment of this application, refer to the following Table 3.

**Table 3 Achievable effect of a zoom lens**

| | Optical parameter |
|---|---|
| Focal length f | 11.99 mm to 27.99 mm |
| F value | 2.8 to 5 |
| Image height IMH | 3 mm |
| TTL | 27.45 mm |
| Design wavelength | 650 nm, 610 nm, 555 nm, 510 nm, and 470 nm |

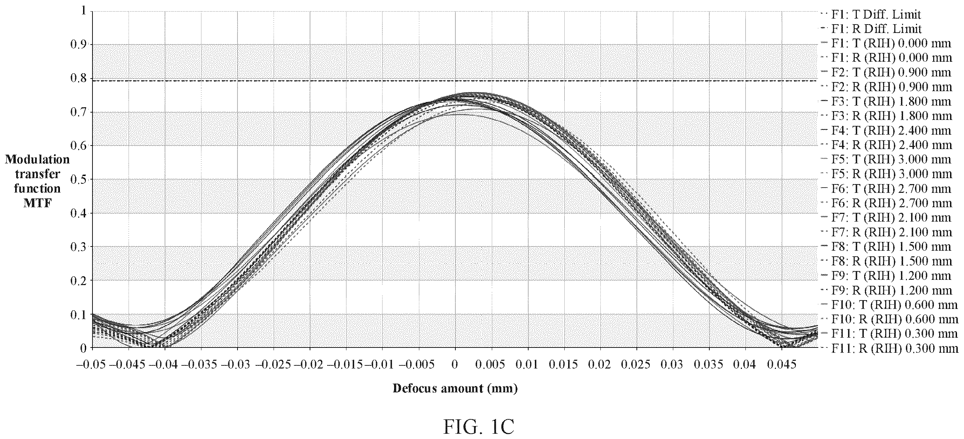

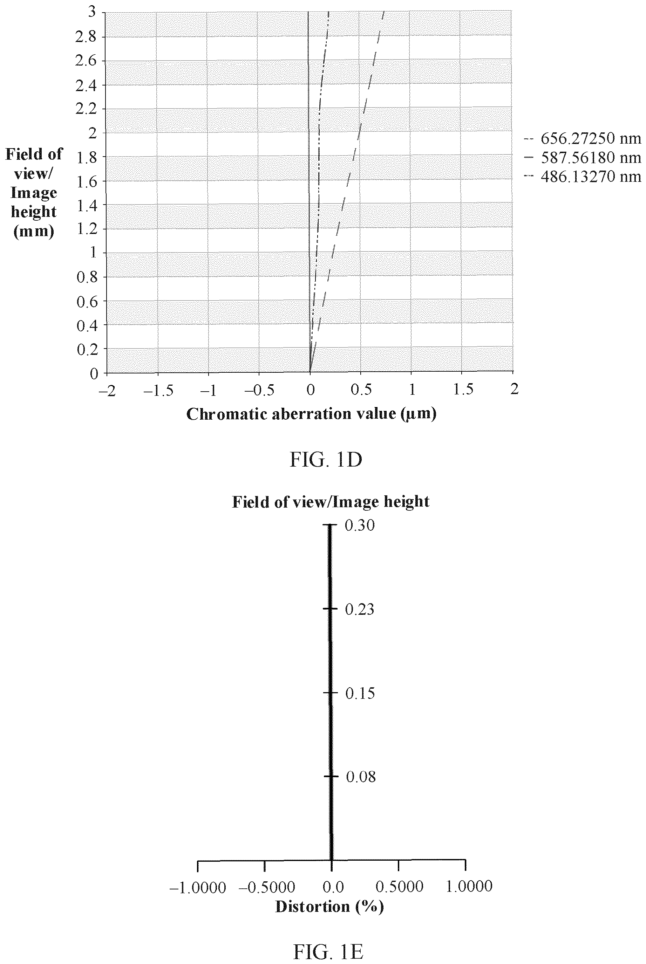

Refer to FIG. 1C, FIG. 1D, and FIG. 1E. The following uses an example in which a zoom lens is at a wide-angle end to describe a defocus amount, a transverse chromatic aberration value, and distortion. A defocus curve, a transverse chromatic aberration curve, and distortion of the zoom lens at a telescopic end are similar to those of the zoom lens at the wide-angle end.

FIG. 1C is a defocus curve diagram of the zoom lens at the wide-angle end shown in FIG. 1A. As shown in FIG. 1C, a horizontal coordinate is a defocus amount, and a vertical coordinate is a value of a modulation transfer function (modulation transfer function, MTF), and a unit is lp/mm (line pairs per mm). It can be learned from simulation results of imaging quality (125 lp/mm) in different fields of view shown by defocus curves that, when the defocus amount is 0, most MTF values in a T direction and an R direction are above 0.7, where the R direction is a direction along a radius of curvature.

FIG. 1D is a transverse chromatic aberration curve diagram of the zoom lens at the wide-angle end shown in FIG. 1A. As shown in FIG. 1D, a horizontal coordinate is a chromatic aberration value, and a vertical coordinate is a field of view/an image height. For example, color light of wavelengths 650 nm, 555 nm, and 470 nm is shown. It can be learned from FIG. 1D that a chromatic aberration value of light at different wavelengths is relatively small.

FIG. 1E is a distortion curve diagram of the zoom lens at the wide-angle end shown in FIG. 1A. As shown in FIG. 1E, a horizontal coordinate is distortion, and a vertical coordinate is a field of view/an image height, indicating a difference between an imaging deformation and an ideal shape. In FIG. 1E, because the distortion is relatively small, a distortion curve basically coincides with the vertical coordinate, so that the distortion of the zoom lens at the wide-angle end may be controlled within 5%.

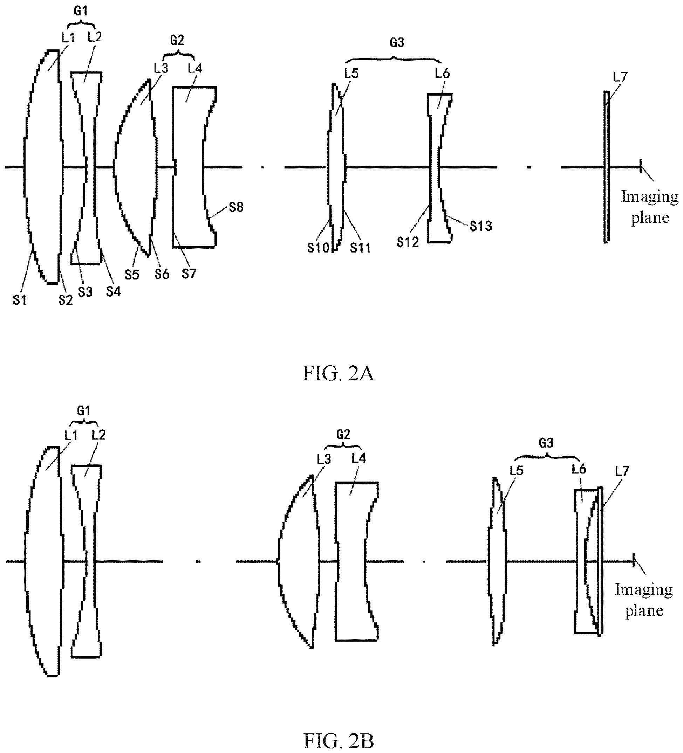

FIG. 2A is a schematic diagram of a structure of a zoom lens at a wide-angle end according to a second embodiment of this application. FIG. 2B is a schematic diagram of a structure of a zoom lens at a telescopic end according to a second embodiment of this application. As shown in FIG. 2A and FIG. 2B, a quantity of lenses included in the zoom lens, a focal power type of each lens, and the value range of an aperture value F# of the zoom lens in the first embodiment of this application may be the same as that of the zoom lens in the second embodiment of this application. A difference between the zoom lens in the second embodiment of this application and the zoom lens in the first embodiment of this application is as follows:

A ratio $|f1/ft|$ of a focal length f1 of a first lens group G1 to a focal length of a telescopic end of the zoom lens is 0.591. A ratio $|f2/ft|$ of a focal length f2 of a second lens group G2 to the focal length ft of the telescopic end of the zoom lens is 0.358. An Abbe number V of a lens having negative focal power in the two-lens second lens group G2, namely, a fourth lens L4, is 19.24. A ratio $|f3/ft|$ of a focal length f3 of a third lens group G3 to the focal length ft of the telescopic end of the zoom lens is 24.8.

A ratio $|f_{L1}/ft|$ of a focal length $f_{L1}$ of a first lens L1 to the focal length ft of the telescopic end of the zoom lens is 0.603. A ratio $|f_{L1}/ft|$ of a focal length $f_{L2}$ of a second lens L2 to the focal length ft of the telescopic end of the zoom lens is 0.264. A ratio $|f_{L3}/ft|$ of a focal length $f_{L3}$ of a third lens L3 to the focal length ft of the telescopic end of the zoom lens is 0.217. A ratio $|f_{L4}/ft|$ of a focal length $f_{L4}$ of the fourth lens L4 to the focal length ft of the telescopic end of the zoom lens is 0.354. A ratio $|f_{L5}/ft|$ of a focal length $f_{L5}$ of a fifth lens L5 to the focal length ft of the telescopic end of the zoom lens is 0.538. A ratio $|f_{L6}/ft|$ of a focal length $f_{L6}$ of a sixth lens L6 to the focal length ft of the telescopic end of the zoom lens is 0.404.

In addition, a ratio TTL/ft of the total track length TTL of the zoom lens to the focal length ft of the telescopic end of the zoom lens may be 1.004. A ratio IH/ft of the maximum image height IH of the zoom lens to the focal length ft of the telescopic end of the zoom lens may be 0.1.

In an example, an effective focal length fs of the zoom lens at the wide-angle end is 11.5 mm and an effective focal length ft of the zoom lens at the telescopic end is 30 mm.

The zoom lens may further include a stop (not shown in the figure). The stop is located between the second lens group G2 and the third lens group G3. Specifically, the stop may be disposed close to the third lens group G3, and the stop does not move during zoom of the zoom lens. As shown in FIG. 2A and FIG. 2B, lenses L1 to L6 and the stop of the zoom lens in the second embodiment are sequentially arranged, and surfaces are respectively S1, S2, S3, S4, ..., stop (the stop, S9), S10, and the like. It should be noted that, only numerals of the surfaces of the lenses L1 to L6 are marked in FIG. 2A, namely, S1, S2, and the like. For numerals of the surfaces of the lenses L1 to L6 in FIG. 2B, refer to FIG. 2A. In other words, the numerals of the surfaces of the lenses in FIG. 2A and those in FIG. 2B are consistent. A radius of curvature R, a center thickness Th, a refractive index Nd, and an Abbe number Vd of each of the lenses L1 to L6 and a light filter L7 are shown in the following Table 4. The second lens group G2 and the third lens group G3 may move in an optical axis direction to change both a focal length of the entire zoom lens and an air gap between some surfaces, namely, a center thickness Th. D1, D2, D3, and D4 are respectively values of corresponding center thicknesses Th when the zoom lens changes to four different focal lengths.

**Table 4 Radius of curvature, refractive index, Abbe number, and center thickness in different focal lengths of each lens**

| Group | Lens | R | D1 | D2 | D3 | D4 | Nd | Vd |
|---|---|---|---|---|---|---|---|---|
| G1 | L1 | 15.194 | 1.800 | 1.800 | 1.800 | 1.800 | 1.671338 | 19.24 |
| | | -57.864 | 0.240 | 0.240 | 0.240 | 0.240 | | |
| | | inf | 0.141 | 0.141 | 0.141 | 0.141 | | |
| | | inf | 0.752 | 0.752 | 0.752 | 0.752 | | |
| | L2 | -11.102 | 0.400 | 0.400 | 0.400 | 0.400 | 1.903664 | 31.31 |
| | | 20.609 | 9.000 | 6.319 | 3.174 | 1.000 | | |

(continued)

| Group | Lens | R | D1 | D2 | D3 | D4 | Nd | Vd |
|---|---|---|---|---|---|---|---|---|
| G2 | L3 | 4.832 | 2.038 | 2.038 | 2.038 | 2.038 | 1.5445 | 55.9 |
| | | -11.465 | 0.080 | 0.080 | 0.080 | 0.080 | | |
| | | inf | 0.566 | 0.566 | 0.566 | 0.566 | | |
| | | inf | 0.199 | 0.199 | 0.199 | 0.199 | | |
| | L4 | -21.915 | 1.367 | 1.367 | 1.367 | 1.367 | 1.671338 | 19.24 |
| | | 10.868 | 6.012 | 6.012 | 6.012 | 6.012 | | |
| | | 11.553 | 0.819 | 0.819 | 0.819 | 0.819 | 1.6355 | 23.97 |
| | | -89.763 | 2.744 | 1.500 | 2.080 | 3.387 | | |
| G3 | L5 | inf | 0.574 | 0.574 | 0.574 | 0.574 | | |
| | | inf | 0.164 | 0.164 | 0.164 | 0.164 | | |
| | L6 | 17.442 | 0.400 | 0.400 | 0.400 | 0.400 | 1.498 | 81.07 |
| | | 4.458 | 0.642 | 4.567 | 7.132 | 7.998 | | |
| | L7 | inf | 0.210 | 0.210 | 0.210 | 0.210 | 1.516797 | 64.2 |
| | | inf | 1.5849 | 1.5849 | 1.5849 | 1.5849 | | |

It should be noted that, in Table 4, a space indicates that there is no specific requirement on a value. "inf" is infinity, and indicates a plane.

In addition, in the second embodiment of this application, all even-order aspheric surface types z may be limited by using but not limited to the following aspheric formula:

$$z = \frac{cr^2}{1 + \sqrt{1 - Kc^2r^2}} + A_4r^4 + A_6r^6 + A_8r^8 + A_{10}r^{10} + A_{12}r^{12}$$

z is a vector height of an aspheric surface, r is a radial coordinate of the aspheric surface, c is vertex curvature of the aspheric surface, K is a quadratic surface constant, and A4, A6, A8, A10, and A12 are aspheric coefficients. A quadratic surface constant and an aspheric coefficient of a surface of each lens in the second embodiment of this application are shown in the following Table 5.

**Table 5 Aspheric coefficient of each lens**

| Aspheric coefficient | | | | | | | | |
|---|---|---|---|---|---|---|---|---|
| | | Type | K | A4 | A6 | A8 | A10 | A12 |
| L1 | S1 | Aspheric surface | 0 | 0.000132 | 1.24E-06 | 5.09E-07 | -5.52E-09 | 4.46E-10 |
| | S2 | Aspheric surface | 0 | -0.0001 | 3.30E-06 | 9.83E-08 | 4.02E-08 | -1.25E-09 |
| L3 | S5 | Aspheric surface | 0 | -0.00039 | -1.24E-06 | -1.44E-06 | -3.11E-09 | 2.78E-09 |
| | S6 | Aspheric surface | 0 | 0.001053 | 7.80E-06 | -6.57E-07 | 9.53E-09 | 1.92E-09 |
| L4 | S7 | Aspheric surface | 0 | 0.000676 | 9.28E-05 | 2.05E-06 | -5.53E-07 | 1.56E-08 |
| | S8 | Aspheric surface | 0 | 0.001601 | 0.0001939 | 1.39E-05 | -1.31E-06 | 1.54E-07 |
| L5 | S10 | Aspheric surface | 0 | -0.00145 | -6.01E-05 | -7.18E-06 | 1.66E-06 | -1.10E-07 |
| | S11 | Aspheric surface | 0 | -0.00132 | -0.000126 | 7.01E-06 | 1.81E-07 | -4.77E-08 |
| L6 | S12 | Aspheric surface | 0 | -0.01326 | 0.0015794 | -4.76E-05 | -7.78E-06 | 6.67E-07 |
| | S13 | Aspheric surface | 0 | -0.01545 | 0.0019038 | -0.000117 | -1.72E-06 | 5.28E-07 |

It can be learned from Table 5 that the zoom lens in the second embodiment of this application includes 10 aspheric surfaces in total. The two surfaces S3 and S4 of L2 are spherical surfaces. For a calculation rule of a value of the aspheric coefficient in Table 5, refer to the calculation rule in Table 2.

For effect that can be implemented by the zoom lens in the second embodiment of this application, refer to the following Table 6.

**Table 6 Achievable effect of a zoom lens**

|  | Optical parameter |
|---|---|
| Focal length f | 11.5 mm to 30 mm |
| F value | 2.8 to 5 |
| Image height IMH | 3 mm |
| TTL | 30 mm |
| Design wavelength | 650 nm, 610 nm, 555 nm, 510 nm, and 470 nm |

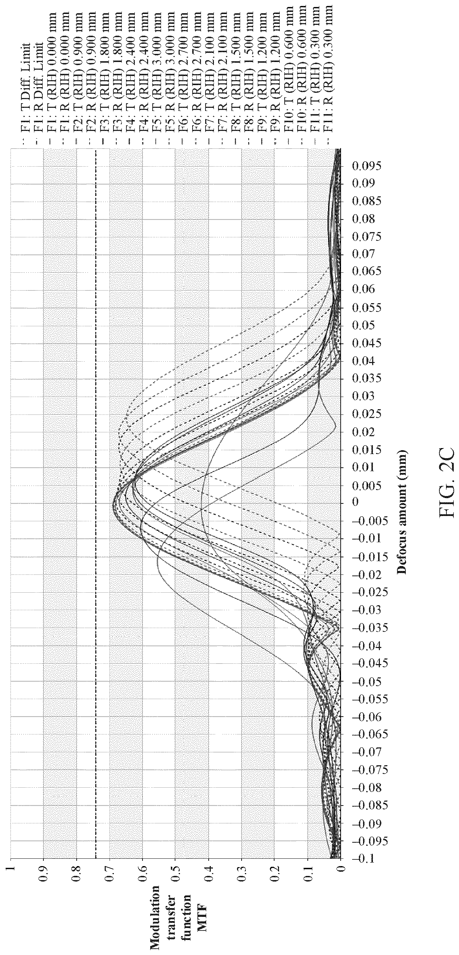

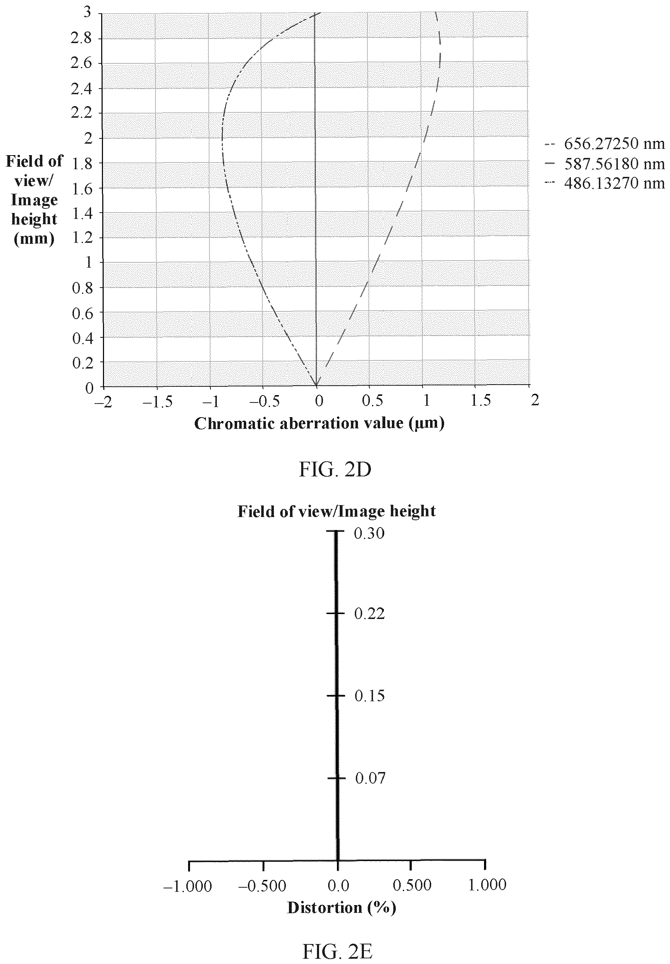

Refer to FIG. 2C, FIG. 2D, and FIG. 2E. The following uses an example in which a zoom lens is at a wide-angle end to describe a defocus amount, a transverse chromatic aberration value, and distortion. A defocus curve, a transverse chromatic aberration curve, and distortion of the zoom lens at a telescopic end are similar to those of the zoom lens at the wide-angle end.

FIG. 2C is a defocus curve diagram of the zoom lens at the wide-angle end shown in FIG. 2A. As shown in FIG. 2C, a horizontal coordinate is a defocus amount, and a vertical coordinate is a value of a modulation transfer function (modulation transfer function, MTF), and a unit is lp/mm (line pairs per mm). It can be learned from simulation results of imaging quality (125 lp/mm) in different fields of view shown by defocus curves that, when the defocus amount is 0, most MTF values in a T direction and an R direction are above 0.4, where the R direction is a direction along a radius of curvature.

FIG. 2D is a transverse chromatic aberration curve diagram of the zoom lens at the wide-angle end shown in FIG. 2A. As shown in FIG. 2D, a horizontal coordinate is a chromatic aberration value, and a vertical coordinate is a field of view/an image height. For example, color light of wavelengths 650 nm, 555 nm, and 470 nm is shown. It can be learned from FIG. 2D that a chromatic aberration value of light at different wavelengths is relatively small.

FIG. 2E is a distortion curve diagram of the zoom lens at the wide-angle end shown in FIG. 2A. As shown in FIG. 2E, a horizontal coordinate is distortion, and a vertical coordinate is a field of view/an image height, indicating a difference between an imaging deformation and an ideal shape. In FIG. 2E, because the distortion is relatively small, a distortion curve basically coincides with the vertical coordinate, so that the distortion of the zoom lens at the wide-angle end may be controlled within 5%.

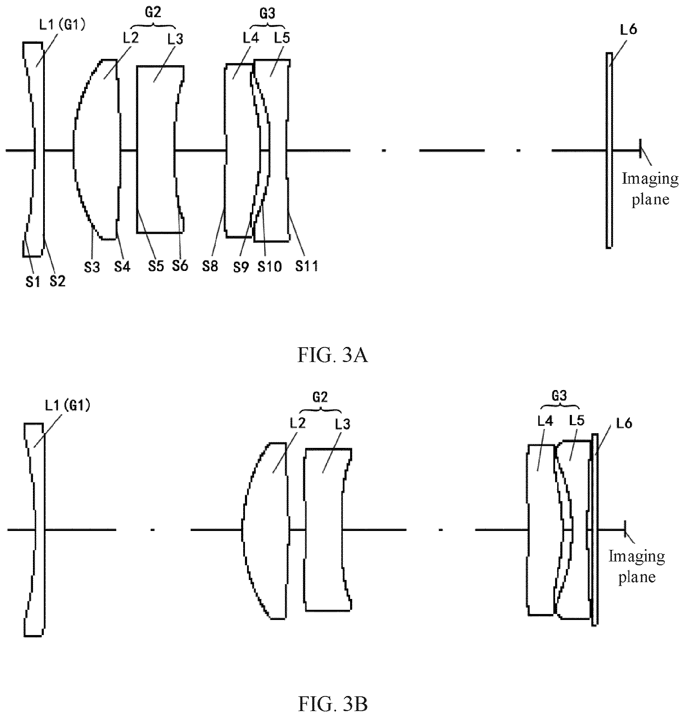

FIG. 3A is a schematic diagram of a structure of a zoom lens at a wide-angle end according to a third embodiment of this application. FIG. 3B is a schematic diagram of a structure of a zoom lens at a telescopic end according to a third embodiment of this application. As shown in FIG. 3A and FIG. 3B, the zoom lens in the third embodiment of this application includes a first lens group G1, a second lens group G2, and a third lens group G3 that are sequentially arranged along an optical axis in a direction from an object side to an image side. In FIG. 3A and FIG. 3B, the object side to an image-side surface are sequentially arranged from left to right. A light filter L6 and an imaging plane are further shown on an image side of the third lens group G3.

The first lens group G1 may be of a single-lens type with negative focal power. The second lens group G2 may be of a two-lens type with positive focal power. The third lens group G3 may be of a two-lens type with negative focal power. Specifically, the first lens group G1 includes a first lens L1. The second lens group G2 includes a second lens L2 and a third lens L3. The third lens group G3 includes a fourth lens L4 and a fifth lens L5. In other words, a total quantity M of lenses having focal power is 5. The first lens L1, the third lens L3, and the fifth lens L5 have negative focal power. The second lens L2 and the fourth lens L4 have positive focal power. Lens surfaces of the second lens L2, the third lens L3, the fourth lens L4, and the fifth lens L5 are aspheric surfaces. N = 8. A lens surface of the first lens L1 may be a spherical surface. The zoom lens may include eight aspheric surfaces and two spherical surfaces.

Further, a ratio |f1/ft| of a focal length f1 of the first lens group G1 to a focal length ft of a telescopic end of the zoom lens is 1.217. A ratio |f2/ft| of a focal length f2 of the second lens group G2 to the focal length ft of the telescopic end of the zoom lens is 0.4. An Abbe number V of a lens having the negative focal power in the two-lens second lens group G2, namely, the third lens L3, is 19.24. A ratio |f3/ft| of a focal length f3 of the third lens group G3 to the focal length ft of the telescopic end of the zoom lens is 0.778.

Ratios of the lenses to the focal length ft of the telescopic end of the zoom lens may be as follows: A ratio $|f_{L1}/ft|$

of a focal length $f_{L1}$ of the first lens L1 to the focal length ft of the telescopic end of the zoom lens is 1.216. A ratio $|f_{L2}/fl|$ of a focal length $f_{L2}$ of the second lens L2 to the focal length ft of the telescopic end of the zoom lens is 0.273. A ratio $|f_{L3}/fl|$ of a focal length $f_{L3}$ of the third lens L3 to the focal length ft of the telescopic end of the zoom lens is 0.594. A ratio $|f_{L4}/fl|$ of a focal length $f_{L4}$ of the fourth lens L4 to the focal length ft of the telescopic end of the zoom lens is 0.492. A ratio $|f_{L5}/f|$ of a focal length $f_{L5}$ of the fifth lens L5 to the focal length ft of the telescopic end of the zoom lens is 0.299.

In addition, a value range of an aperture value F# of the zoom lens may be 2.8 ≤ F# ≤ 5. A ratio TTL/ft of the total track length TTL of the zoom lens to the focal length ft of the telescopic end of the zoom lens may be 1.02. A ratio IH/ft of the maximum image height IH of the zoom lens to the focal length ft of the telescopic end of the zoom lens may be 0.12. In an example, an effective focal length fs of the zoom lens at the wide-angle end is 12 mm and an effective focal length ft of the zoom lens at the telescopic end is 25 mm.

The zoom lens may further include a stop (not shown in the figure). The stop is located between the second lens group G2 and the third lens group G3. The stop may be disposed close to the third lens group G3, and the stop does not move during zoom of the zoom lens. As shown in FIG. 3A and FIG. 3B, lenses L1 to L5 and the stop of the zoom lens in the third embodiment are sequentially arranged, and surfaces are respectively S1, S2, S3, S4, ..., stop (the stop S7), S8, and the like. It should be noted that, only numerals of the surfaces of the lenses L1 to L5 are marked in FIG. 3A, namely, S1, S2, and the like. For numerals of the surfaces of the lenses L1 to L5 in FIG. 3B, refer to FIG. 3A. In other words, the numerals of the surfaces of the lenses L1 to L5 in FIG. 3A and those in FIG. 3B are consistent. A radius of curvature R, a center thickness Th, a refractive index Nd, and an Abbe number Vd of each of the lenses L1 to L5 and the light filter L6 are shown in the following Table 7. The second lens group G2 and the third lens group G3 may move in an optical axis direction to change both a focal length of the entire zoom lens, and an air gap between some surfaces, namely, a center thickness Th. D1, D2, D3, and D4 are respectively values of corresponding center thicknesses Th when the zoom lens changes to four different focal lengths.

**Table 7 Radius of curvature, refractive index, Abbe number, and center thickness in different focal lengths of each lens**

| Group | Lens | R | D1 | D2 | D3 | D4 | Nd | Vd |
|---|---|---|---|---|---|---|---|---|
| G1 | L1 | -12.993 | 0.400 | 0.400 | 0.400 | 0.400 | 1.5155 | 76.61 |
| | | -76.554 | 7.775 | 5.378 | 1.591 | 1.102 | | |
| G2 | L2 | 4.533 | 1.800 | 1.800 | 1.800 | 1.800 | 1.5445 | 55.9 |
| | | -17.828 | 0.182 | 0.182 | 0.182 | 0.182 | | |
| | | inf | 0.182 | 0.182 | 0.182 | 0.182 | | |
| | | inf | 0.285 | 0.285 | 0.285 | 0.285 | | |
| | L3 | -25.272 | 1.427 | 1.427 | 1.427 | 1.427 | 1.6713 | 19.24 |
| | | 16.889 | 0.370 | 0.370 | 0.370 | 0.370 | | |
| | | inf | 0.087 | 0.087 | 0.087 | 0.087 | | |
| | | inf | 6.904 | 3.172 | 1.589 | 1.500 | | |
| G3 | L4 | -14.955 | 1.341 | 1.341 | 1.341 | 1.341 | 1.572 | 41 |
| | | -4.952 | 0.368 | 0.368 | 0.368 | 0.368 | | |
| | L5 | -5.698 | 0.606 | 0.606 | 0.606 | 0.606 | 1.4969 | 81.6 |
| | | 11.076 | 0.182 | 6.311 | 11.681 | 12.259 | | |
| | L6 | inf | 0.210 | 0.210 | 0.210 | 0.210 | 1.516797 | 64.2 |
| | | inf | 1.080 | 1.080 | 1.080 | 1.080 | | |

It should be noted that, in Table 7, a space indicates that there is no specific requirement on a value. "inf" is infinity, and indicates a plane.

In addition, a quadratic curved surface constant and an aspheric coefficient of a surface of each lens in the third embodiment of this application are shown in the following Table 8.

**Table 8 Aspheric coefficient of each lens**

| Aspheric coefficient | | | Type | K | A4 | A6 | A8 | A10 | A12 |
|---|---|---|---|---|---|---|---|---|---|
| L2 | S3 | | Aspheric surface | 0 | -0.0002 | -5.05E-06 | 7.25E-07 | 1.14E-07 | 4.46E-09 |
| | S4 | | Aspheric surface | 0 | 0.001268 | 3.65E-05 | 8.74E-09 | -2.03E-07 | 1.61E-09 |
| L3 | S5 | | Aspheric surface | 0 | 0.003043 | 5.22E-05 | -8.98E-06 | -5.44E-07 | 3.15E-09 |
| | S6 | | Aspheric surface | 0 | 0.004831 | 0.0001664 | 1.93E-05 | -3.25E-06 | 2.97E-07 |
| L4 | S8 | | Aspheric surface | 0 | 0.003208 | -9.68E-05 | 6.61E-05 | 2.61E-06 | -8.78E-07 |
| | S9 | | Aspheric surface | 0 | 0.006381 | -0.000723 | 0.000243 | -1.82E-05 | 8.90E-07 |
| L5 | S10 | | Aspheric surface | 0 | -0.00763 | 0.001051 | 9.49E-05 | -3.91E-05 | 3.92E-06 |
| | S11 | | Aspheric surface | 0 | -0.0116 | 0.0021686 | -0.000272 | 1.50E-05 | 1.41E-08 |

In the third embodiment of this application, all even-order aspheric surface types z may be limited by using but not limited to the following aspheric formula:

$$z = \frac{cr^2}{1 + \sqrt{1 - Kc^2r^2}} + A_4 r^4 + A_6 r^6 + A_8 r^8 + A_{10} r^{10} + A_{12} r^{12}$$

z is a vector height of an aspheric surface, r is a radial coordinate of the aspheric surface, c is vertex curvature of the aspheric surface, K is a quadratic surface constant, and A4, A6, A8, A10, and A12 are aspheric coefficients. It can be learned from Table 8 that the zoom lens in the third embodiment of this application includes eight aspheric surfaces in total. The two surfaces S1 and S2 of L1 are spherical surfaces. For a calculation rule of a value of the aspheric coefficient in Table 8, refer to the calculation rule in Table 2.

For effect that can be implemented by the zoom lens in the third embodiment of this application, refer to the following Table 9.

**Table 9 Achievable effect of a zoom lens**

| | Optical parameter |
|---|---|
| Focal length f | 12 mm to 25 mm |
| F value | 2.8 to 5 |
| Image height IMH | 3 mm |
| TTL | 25 mm |
| Design wavelength | 650 nm, 610 nm, 555 nm, 510 nm, and 470 nm |

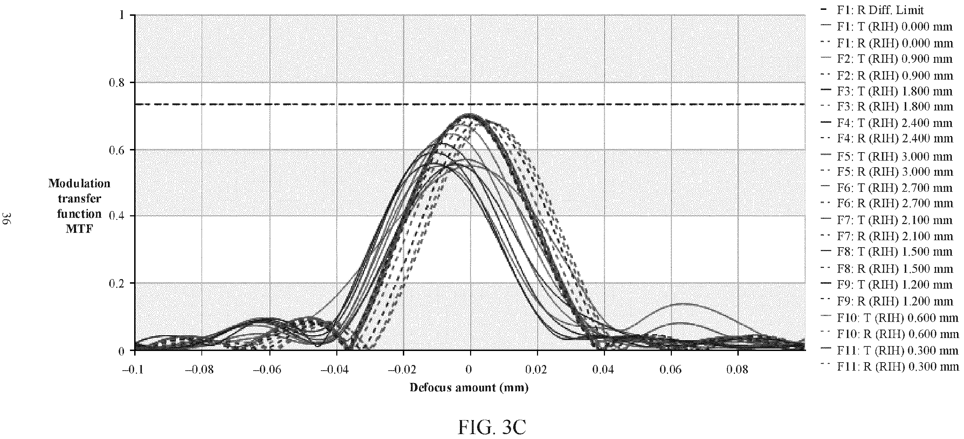

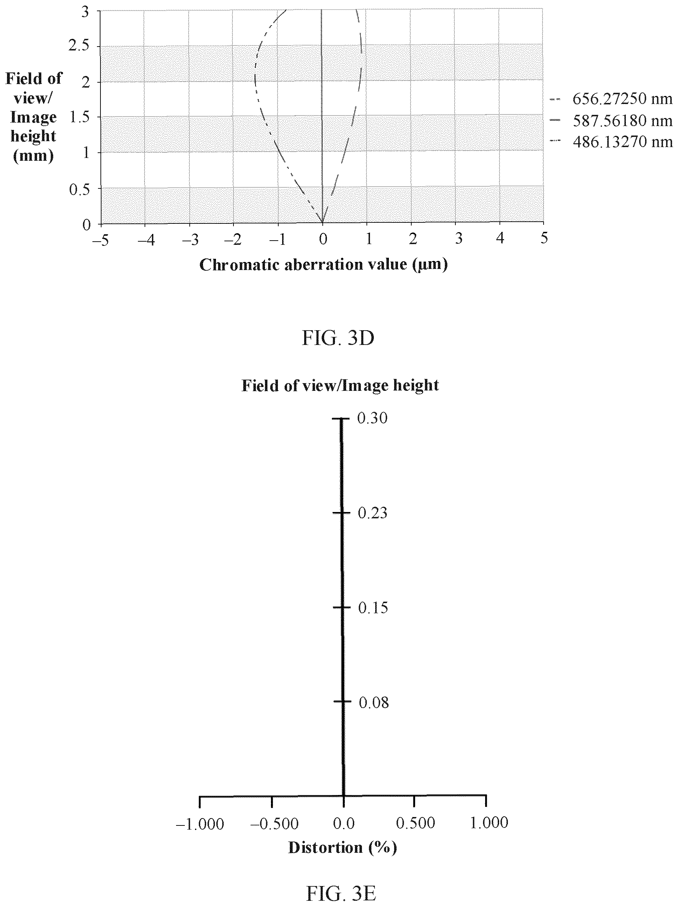

Refer to FIG. 3C, FIG. 3D, and FIG. 3E. The following uses an example in which a zoom lens is at a wide-angle end to describe a defocus amount, a transverse chromatic aberration value, and distortion. A defocus curve, a transverse chromatic aberration curve, and distortion of the zoom lens at a telescopic end are similar to those of the zoom lens at the wide-angle end.

FIG. 3C is a defocus curve diagram of the zoom lens at the wide-angle end shown in FIG. 3A. As shown in FIG. 3C, a horizontal coordinate is a defocus amount, and a vertical coordinate is a value of a modulation transfer function (modulation transfer function, MTF), and a unit is lp/mm (line pairs per mm). It can be learned from simulation results of imaging quality (125 lp/mm) in different fields of view shown by defocus curves that, when the defocus amount is 0, most MTF values in a T direction and an R direction are above 0.5, where the R direction is a direction along a radius of curvature.

FIG. 3D is a transverse chromatic aberration curve diagram of the zoom lens at the wide-angle end shown in FIG. 3A. As shown in FIG. 3D, a horizontal coordinate is a chromatic aberration value, and a vertical coordinate is a field of view/an image height. For example, color light of wavelengths 650 nm, 555 nm, and 470 nm is shown. It can be learned from FIG. 3D that a chromatic aberration value of light at different wavelengths is relatively small.

FIG. 3E is a distortion curve diagram of the zoom lens at the wide-angle end shown in FIG. 3A. As shown in FIG. 3E, a horizontal coordinate is distortion, and a vertical coordinate is a field of view/an image height, indicating a difference between an imaging deformation and an ideal shape. In FIG. 3E, because the distortion is relatively small, a distortion curve basically coincides with the vertical coordinate, so that the distortion of the zoom lens at the wide-angle end may be controlled within 5%.

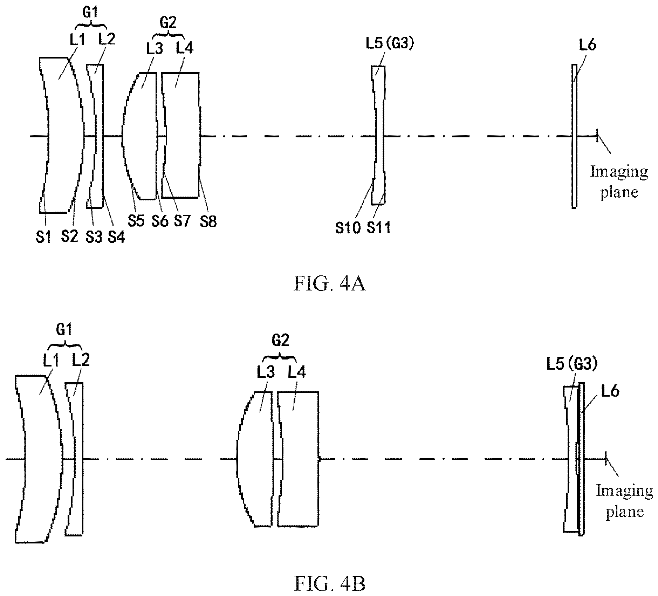

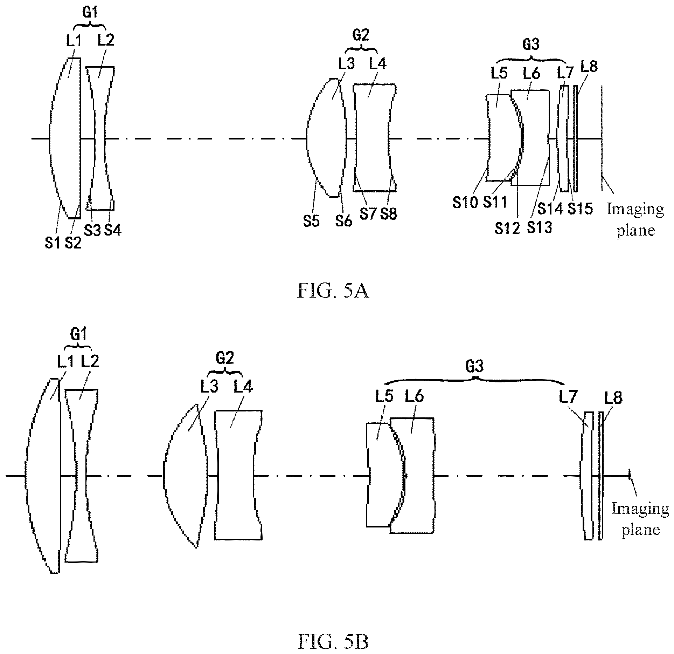

FIG. 4A is a schematic diagram of a structure of a zoom lens at a wide-angle end according to a fourth embodiment of this application. FIG. 4B is a schematic diagram of a structure of a zoom lens at a telescopic end according to a fourth embodiment of this application. As shown in FIG. 4A and FIG. 5B, an optical lens according to the fourth embodiment of this application includes a first lens group G1, a second lens group G2, and a third lens group G3 that are sequentially arranged along an optical axis in a direction from an object side to an image side. In FIG. 4A and FIG. 4B, from left to right, there is an object side to an image side sequentially. A light filter L6 and an imaging plane are further shown on an image side of the third lens group G3.

The first lens group G1 may be of a two-lens type with negative focal power. The second lens group G2 may be of a two-lens type with positive focal power. The third lens group G3 may be of a single-lens type with negative focal power. Specifically, the first lens group G1 includes a first lens L1 and a second lens L2. The second lens group G2 includes a third lens L3 and a fourth lens L4. The third lens group G3 includes a fifth lens L5. In other words, a total quantity M of lenses having focal power is 5. The first lens L1 and the third lens L3 have positive focal power. The second lens L2, the fourth lens L4, and the fifth lens L5 have negative focal power. Lens surfaces of the first lens L1, the third lens L3, the fourth lens L4, and the fifth lens L5 are aspheric surfaces. N = 8. A lens surface of the second lens L2 may be a spherical surface. The zoom lens may include eight aspheric surfaces and two spherical surfaces.

Further, a ratio |f1/ft| of a focal length f1 of the first lens group G1 to a focal length ft of the telescopic end of the zoom lens is 0.796. A ratio |f2/ft| of a focal length f2 of the second lens group G2 to the focal length ft of the telescopic end of the zoom lens is 0.419. An Abbe number V of a lens having the negative focal power in the two-piece second lens group G2, namely, the fourth lens L4, is 19.24. A ratio |f3/ft| of a focal length f3 of the third lens group G3 to the focal length ft of the telescopic end of the zoom lens is 1.072.

Ratios of the lenses to the focal length ft of the telescopic end of the zoom lens may be as follows: A ratio $|f_{L1}/ft|$ of a focal length $f_{L1}$ of the first lens L1 to the focal length ft of the telescopic end of the zoom lens is 1.607. A ratio $|f_{L2}/ft|$ of a focal length $f_{L2}$ of the second lens L2 to the focal length ft of the telescopic end of the zoom lens is 0.559. A ratio $|f_{L3}/ft|$ of a focal length $f_{L3}$ of the third lens L3 to the focal length ft of the telescopic end of the zoom lens is 0.314. A ratio $|f_{L4}/ft|$ of a focal length $f_{L4}$ of the fourth lens L4 to the focal length ft of the telescopic end of the zoom lens is 1.243. A ratio $|f_{L5}/ft|$ of a focal length $f_{L5}$ of the fifth lens L5 to the focal length ft of the telescopic end of the zoom lens is 1.072.

In addition, a value range of an aperture value F# of the zoom lens may be $3.5 \leq F\# \leq 5.75$. A ratio TTL/ft of the total track length TTL of the zoom lens to the focal length ft of the telescopic end of the zoom lens may be 1.164. A ratio IH/ft of the maximum image height IH of the zoom lens to the focal length ft of the telescopic end of the zoom lens may be 0.12.

In an example, an effective focal length fs of the zoom lens at the wide-angle end is 12 mm and an effective focal length ft of the zoom lens at the telescopic end is 25 mm.

The zoom lens may further include a stop. The stop is located between the second lens group G2 and the third lens group G3. The stop may be disposed close to the third lens group G3, and the stop does not move during zoom of the zoom lens. As shown in FIG. 4A and FIG. 4B, lenses L1 to L5 and the stop of the zoom lens in the fourth embodiment are sequentially arranged, and surfaces are respectively S1, S2, S3, S4, ..., stop (the stop S9), S10, and the like. It should be noted that, only numerals of the surfaces of the lens L1 to L5 are marked in FIG. 4A, namely, S1, S2, and the like. For numerals of the surfaces of the lenses L1 to L5 in FIG. 4B, refer to FIG. 4A. In other words, the numerals of the surfaces of the lenses L1 to L5 in FIG. 4A and those in FIG. 4B are consistent. A radius of curvature R, a center thickness Th, a refractive index Nd, and an Abbe number Vd of each of the lenses L1 to L5 and the light filter L6 are shown in the following Table 10. The second lens group G2 and the third lens group G3 may move in an optical axis direction to change both a focal length of the entire zoom lens, and an air gap between some surfaces, namely, a center thickness Th. D1, D2, D3, and D4 are respectively values of corresponding center thicknesses Th when the zoom lens changes to four different focal lengths.

**Table 10 Radius of curvature, refractive index, Abbe number, and center thickness in different focal lengths of each lens**

| Group | Lens | R | D1 | D2 | D3 | D4 | Nd | Vd |
|---|---|---|---|---|---|---|---|---|
| G1 | L1 | -10.873 | 1.800 | 1.800 | 1.800 | 1.800 | 1.671 | 19.240 |
| | | -8.264 | 0.080 | 0.080 | 0.080 | 0.080 | | |
| | L2 | inf | 0.080 | 0.080 | 0.080 | 0.080 | | |
| | | inf | 0.465 | 0.465 | 0.465 | 0.465 | | |
| | | -11.275 | 0.400 | 0.400 | 0.400 | 0.400 | 1.767 | 49.860 |
| | | 222.958 | 7.556 | 4.934 | 1.423 | 1.000 | | |
| G2 | L3 | 4.957 | 1.800 | 1.800 | 1.800 | 1.800 | 1.526 | 74.180 |
| | | -21.846 | 0.080 | 0.080 | 0.080 | 0.080 | | |
| | | inf | 0.080 | 0.080 | 0.080 | 0.080 | | |
| | | inf | 0.298 | 0.298 | 0.298 | 0.298 | | |
| | L4 | -8.763 | 1.800 | 1.800 | 1.800 | 1.800 | 1.671 | 19.240 |
| | | -16.347 | 3.488 | 3.488 | 3.488 | 3.488 | | |
| G3 | L5 | 10.987 | 0.635 | 0.635 | 0.635 | 0.635 | | |
| | | inf | 5.239 | 1.751 | 1.895 | 2.107 | | |
| | | inf | 2.306 | 2.306 | 2.306 | 2.306 | | |
| | | -3.766 | 0.586 | 0.586 | 0.586 | 0.586 | | |
| | | -24.442 | 0.400 | 0.400 | 0.400 | 0.400 | 1.497 | 81.59 |
| | | 29.471 | 0.149 | 6.260 | 9.627 | 9.837 | | |
| | L6 | inf | 0.210 | 0.210 | 0.210 | 0.210 | 1.517 | 64.200 |
| | | inf | 1.08 | 1.08 | 1.08 | 1.08 | | |

It should be noted that, in Table 10, a space indicates that there is no specific requirement on a value. "inf" is infinity, and indicates a plane.

In addition, in the fourth embodiment of this application, all even-order aspheric surface types z may be limited by using but not limited to the following aspheric formula:

$$z = \frac{cr^2}{1 + \sqrt{1 - Kc^2r^2}} + A_4r^4 + A_6r^6 + A_8r^8 + A_{10}r^{10} + A_{12}r^{12}$$

z is a vector height of an aspheric surface, r is a radial coordinate of the aspheric surface, c is vertex curvature of the aspheric surface, K is a quadratic surface constant, and A4, A6, A8, A10, and A12 are aspheric coefficients. A quadratic surface constant and an aspheric coefficient of a surface of each lens in the fourth embodiment of this application are shown in the following Table 11.

**Table 11 Aspheric coefficient of each lens**

| Aspheric coefficient | | | | | | | | |
|---|---|---|---|---|---|---|---|---|
| | | Type | K | A4 | A6 | A8 | A10 | A12 |
| L1 | S1 | Aspheric surface | 0 | -3.12E-04 | -8.20E-06 | 3.71E-07 | -1.60E-07 | 1.01E-08 |
| | S2 | Aspheric surface | 0 | -1.93E-04 | -4.13E-06 | 2.12E-08 | -7.74E-08 | 6.05E-09 |
| L3 | S5 | Aspheric surface | 0 | 2.42E-04 | 1.39E-05 | -2.74E-08 | 3.47E-08 | -2.82E-08 |
| | S6 | Aspheric surface | 0 | 1.97E-03 | 7.79E-05 | -5.03E-07 | -4.37E-07 | -4.83E-09 |

(continued)

| Aspheric coefficient | | | | | | | | |
|---|---|---|---|---|---|---|---|---|
| | | Type | K | A4 | A6 | A8 | A10 | A12 |
| L4 | S7 | Aspheric surface | 0 | 0.003294 | 9.50E-05 | -2.28E-06 | -8.47E-08 | 1.09E-08 |
| | S8 | Aspheric surface | 0 | 2.92E-03 | 8.55E-05 | 1.14E-05 | -1.02E-06 | 1.12E-07 |
| L5 | S10 | Aspheric surface | 0 | -0.00372 | 4.96E-04 | 1.49E-05 | -9.74E-06 | 6.67E-07 |
| | S11 | Aspheric surface | 0 | -0.00369 | 0.0005098 | 7.46E-06 | -8.38E-06 | 5.83E-07 |

It can be learned from Table 11 that the zoom lens in the fourth embodiment of this application includes eight aspheric surfaces in total. The two surfaces S3 and S4 of L2 are spherical surfaces. For a calculation rule of a value of the aspheric coefficient in Table 11, refer to the calculation rule in Table 2.

For effect that can be implemented by the zoom lens in the fourth embodiment of this application, refer to the following Table 12.

**Table 12 Achievable effect of a zoom lens**

| | Optical parameter |
|---|---|
| Focal length f | 12 mm to 25 mm |
| F value | 3.55 to 5.75 |
| Image height IMH | 3 mm |
| TTL | 30.13 mm |
| Design wavelength | 650 nm, 610 nm, 555 nm, 510 nm, and 470 nm |

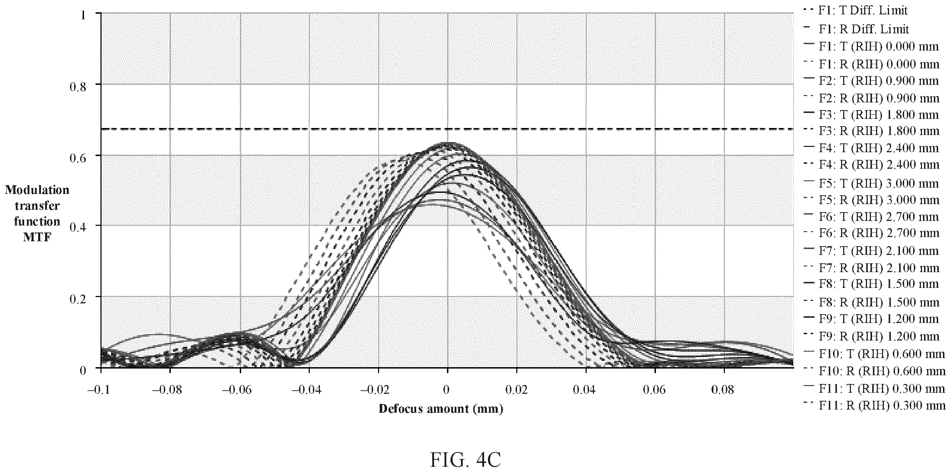

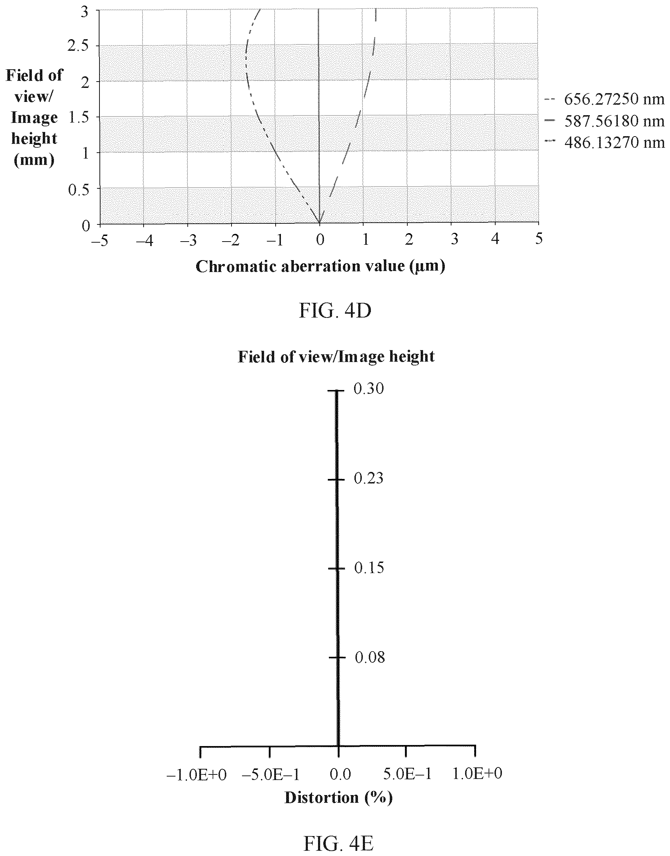

Refer to FIG. 4C, FIG. 4D, and FIG. 4E. The following uses an example in which a zoom lens is at a wide-angle end to describe a defocus amount, a transverse chromatic aberration value, and distortion. A defocus curve, a transverse chromatic aberration curve, and distortion of the zoom lens at a telescopic end are similar to those of the zoom lens at the wide-angle end.

FIG. 4C is a defocus curve diagram of the zoom lens at the wide-angle end shown in FIG. 4A. As shown in FIG. 4C, a horizontal coordinate is a defocus amount, and a vertical coordinate is a value of a modulation transfer function (modulation transfer function, MTF), and a unit is lphnm (line pairs per mm). It can be learned from simulation results of imaging quality (125 lp/mm) in different fields of view shown by defocus curves that, when the defocus amount is 0, most MTF values in a T direction and an R direction are above 0.5, where the R direction is a direction along a radius of curvature.

FIG. 4D is a transverse chromatic aberration curve diagram of the zoom lens at the wide-angle end shown in FIG. 4A. As shown in FIG. 4D, a horizontal coordinate is a chromatic aberration value, and a vertical coordinate is a field of view/an image height. For example, color light of wavelengths 650 nm, 555 nm, and 470 nm is shown. It can be learned from FIG. 4D that a chromatic aberration value of light at different wavelengths is relatively small.

FIG. 4E is a distortion curve diagram of the zoom lens at the wide-angle end shown in FIG. 4A. As shown in FIG. 4E, a horizontal coordinate is distortion, and a vertical coordinate is a field of view/an image height, indicating a difference between imaging deformation and an ideal shape. In FIG. 4E, because the distortion is relatively small, a distortion curve basically coincides with the vertical coordinate, so that the distortion of the zoom lens at the wide-angle end may be controlled within 5%.

FIG. 5A is a schematic diagram of a structure of a zoom lens at a wide-angle end according to a fifth embodiment of this application. FIG. 5B is a schematic diagram of a structure of a zoom lens at a telescopic end according to a fifth embodiment of this application. As shown in FIG. 5A and FIG. 5B, the zoom lens in the fifth embodiment of this application includes a first lens group G1, a second lens group G2, and a third lens group G3 that are sequentially arranged along an optical axis in a direction from an object side to an image side. In FIG. 5A and FIG. 5B, the object side to an image-side surface are sequentially arranged from left to right. A light filter L8 and an imaging plane are further shown on an image side of the third lens group G3.

The first lens group G1 may be of a two-lens type with negative focal power. The second lens group G2 may be of a two-lens type with positive focal power. The third lens group G3 may be of a three-lens type with negative focal power. Specifically, the first lens group G1 includes a first lens L1 and a second lens L2. The second lens group G2 includes a third lens L3 and a fourth lens L4. The third lens group G3 includes a fifth lens L5, a sixth lens L6, and a seventh lens L7. In other words, a total quantity M of lenses having focal power is 7. The first lens L1, the third lens L3, the fifth lens L5, and the seventh lens L7 have positive focal power. The second lens L2, the fourth lens L4, and the sixth lens L6 have negative focal power. Lens surfaces of the first lens L1, the third lens L3, the fourth lens L4, the fifth lens L5, and the sixth lens L6 are aspheric surfaces. N = 10. In other words, two lens surfaces of the second lens L2 and two lens surfaces of the seventh lens L7 may be spherical surfaces. The zoom lens may include 10 aspheric surfaces and four spherical surfaces.

Further, a ratio |f1/ft| of a focal length f1 of the first lens group G1 to a focal length ft of the telescopic end of the zoom lens is 0.665. A ratio |f2/ft| of a focal length f2 of the second lens group G2 to the focal length ft of the telescopic end of the zoom lens is 0.306. An Abbe number V of a lens having the negative focal power in the two-lens second lens group G2, namely, the fourth lens L4, is 31.3. A ratio |f3/ft| of a focal length f3 of the third lens group G3 to the focal length ft of the telescopic end of the zoom lens is 0.647.

Ratios of the lenses to the focal length ft of the telescopic end of the zoom lens may be as follows: A ratio $|f_{L1}/ft|$ of a focal length $f_{L1}$ of the first lens L1 to the focal length ft of the telescopic end of the zoom lens is 0.563. A ratio $|f_{L2}/ft|$ of a focal length $f_{L2}$ of the second lens L2 to the focal length ft of the telescopic end of the zoom lens is 0.266. A ratio $|f_{L3}/ft|$ of a focal length $f_{L3}$ of the third lens L3 to the focal length ft of the telescopic end of the zoom lens is 0.204. A ratio $|f_{L4}/ft|$ of a focal length $f_{L4}$ of the fourth lens L4 to the focal length ft of the telescopic end of the zoom lens is 0.398. A ratio $|f_{L5}/ft|$ of a focal length $f_{L5}$ of the fifth lens L5 to the focal length ft of the telescopic end of the zoom lens is 0.294. A ratio $|f_{L6}/ft|$ of a focal length $f_{L6}$ of the sixth lens L6 to the focal length ft of the telescopic end of the zoom lens is 0.167. A ratio $|f_{L7}/ft|$ of a focal length $f_{L7}$ of the seventh lens L7 to the focal length ft of the telescopic end of the zoom lens is 0.91.

In addition, a value range of an aperture value F# of the zoom lens may be $2.93 \leq F\# \leq 5.5$. A ratio TTL/ft of the total track length TTL of the zoom lens to the focal length ft of the telescopic end of the zoom lens may be 1.1. A ratio IH/ft of the maximum image height IH of the zoom lens to the focal length ft of the telescopic end of the zoom lens may be 0.103.

In an example, an effective focal length fs of the zoom lens at the wide-angle end is 11.5 mm and an effective focal length ft of the zoom lens at the telescopic end is 29 mm.

The zoom lens may further include a stop. The stop is located between the second lens group G2 and the third lens group G3. The stop may be disposed close to the third lens group G3, and the stop does not move during zoom of the zoom lens. As shown in FIG. 5A and FIG. 5B, lenses L1 to L7 and the stop of the zoom lens in the fifth embodiment are sequentially arranged, and surfaces are respectively S1, S2, S3, S4, ..., stop (the stop S9), S10, and the like. It should be noted that, only numerals of the surfaces of the lenses L1 to L7 are marked in FIG. 5A, namely, S1, S2, and the like. For numerals of the surfaces of the lenses L1 to L7 in FIG. 5B, refer to FIG. 5A. In other words, the numerals of the surfaces of the lenses L1 to L7 in FIG. 5A and those in FIG. 5B are consistent. A radius of curvature R, a center thickness Th, a refractive index Nd, and an Abbe number Vd of each of the lenses L1 to L7 and the light filter L8 are shown in the following Table 13. The second lens group G2 and the third lens group G3 may move in an optical axis direction to change both a focal length of the entire zoom lens, and an air gap between some surfaces, namely, the center thickness Th. D1, D2, D3, and D4 are respectively values of corresponding center thicknesses Th when the zoom lens changes to four different focal lengths.

**Table 13 Radius of curvature, refractive index, Abbe number, and center thickness in different focal lengths of each lens**

| Group | Lens | R | D1 | D2 | D3 | D4 | Nd | Vd |
|---|---|---|---|---|---|---|---|---|
| G1 | L1 | 10.595 | 1.768 | 1.768 | 1.768 | 1.768 | 1.6713 | 19.24 |
| | | 287.177 | 0.153 | 0.153 | 0.153 | 0.153 | | |
| | | inf | 0.080 | 0.080 | 0.080 | 0.080 | | |
| | | inf | 0.605 | 0.605 | 0.605 | 0.605 | | |
| | L2 | -15.624 | 0.510 | 0.510 | 0.510 | 0.510 | 1.903 | 31.3 |
| | | 12.815 | 11.470 | 8.691 | 5.731 | 4.047 | | |
| G2 | L3 | 4.556 | 2.259 | 2.259 | 2.259 | 2.259 | 1.5445 | 55.9 |
| | | -9.204 | 0.080 | 0.080 | 0.080 | 0.080 | | |

(continued)

| Group | Lens | R | D1 | D2 | D3 | D4 | Nd | Vd |
|---|---|---|---|---|---|---|---|---|
| | | inf | 0.254 | 0.254 | 0.254 | 0.254 | | |
| | | inf | 0.257 | 0.257 | 0.257 | 0.257 | | |
| | L4 | -14.325 | 1.800 | 1.800 | 1.800 | 1.800 | 1.671 | 19.24 |
| | | 17.778 | 3.217 | 3.217 | 3.217 | 3.217 | | |
| | | inf | 0.095 | 0.095 | 0.095 | 0.095 | | |
| | | inf | 2.412 | 1.591 | 1.985 | 2.691 | | |
| G3 | L5 | -8.670 | 1.800 | 1.800 | 1.800 | 1.800 | 1.671 | 19.24 |
| | | -3.743 | 0.089 | 0.089 | 0.089 | 0.089 | | |
| | L6 | -7.903 | 1.437 | 1.437 | 1.437 | 1.437 | 1.851 | 40.1 |
| | | 9.429 | 0.500 | 4.100 | 6.666 | 7.644 | | |
| | L7 | 22.725 | 0.580 | 0.580 | 0.580 | 0.580 | 1.945 | 17.94 |
| | | 244.586 | 0.370 | 0.370 | 0.370 | 0.370 | | |
| | L8 | inf | 0.21 | 0.21 | 0.21 | 0.21 | 1.517 | 64.200 |
| | | inf | 1.3771 | 1.3771 | 1.3771 | 1.3771 | | |

It should be noted that, in Table 13, a space indicates that there is no specific requirement on a value. "inf" is infinity, and indicates a plane.

In addition, in the fifth embodiment of this application, all even-order aspheric surface types z may be limited by using but not limited to the following aspheric formula:

$$z = \frac{cr^2}{1 + \sqrt{1 - Kc^2 r^2}} + A_4 r^4 + A_6 r^6 + A_8 r^8 + A_{10} r^{10} + A_{12} r^{12}$$

z is a vector height of an aspheric surface, r is a radial coordinate of the aspheric surface, c is vertex curvature of the aspheric surface, K is a quadratic surface constant, and A4, A6, A8, A10, and A12 are aspheric coefficients. A quadratic surface constant and an aspheric coefficient of a surface of each lens in the fifth embodiment of this application are shown in the following Table 14.

**Table 14 Aspheric coefficient of each lens**

| Aspheric coefficient | | | | | | | | |
|---|---|---|---|---|---|---|---|---|
| | | Type | K | A4 | A6 | A8 | A10 | A12 |
| L1 | S1 | Aspheric surface | 0 | 6.80E-05 | 1.64E-06 | 1.39E-07 | -7.81E-09 | 6.71E-11 |
| | S2 | Aspheric surface | 0 | -0.000162 | 1.72E-06 | -2.00E-08 | -1.22E-08 | 2.74E-10 |
| L3 | S5 | Aspheric surface | 0 | -0.000543 | -1.93E-05 | -1.71E-06 | -3.47E-08 | -6.59E-10 |
| | S6 | Aspheric surface | 0 | 0.0012632 | 7.07E-06 | -1.06E-06 | 1.11E-08 | 1.26E-09 |
| L4 | S7 | Aspheric surface | 0 | 0.0011337 | 7.98E-05 | 1.94E-06 | -4.88E-07 | 1.28E-08 |
| | S8 | Aspheric surface | 0 | 0.0026419 | 0.0001892 | 1.84E-05 | -1.11E-06 | 1.08E-07 |
| L5 | S10 | Aspheric surface | 0 | 0.0071961 | -0.000564 | 8.82E-05 | -7.36E-06 | 1.70E-07 |
| | S11 | Aspheric surface | 0 | 0.0057423 | -0.000606 | 0.0002462 | -2.53E-05 | 3.76E-07 |
| L6 | S12 | Aspheric surface | 0 | -0.017275 | 0.0009697 | 0.0001979 | -2.93E-05 | 6.73E-07 |
| | S13 | Aspheric surface | 0 | -0.016669 | 0.0026361 | -0.000324 | 2.80E-05 | -1.12E-06 |

It can be learned from Table 14 that the zoom lens in the fifth embodiment of this application includes 10 aspheric surfaces. The two surfaces S3 and S4 of L2 and the two surfaces S14 and S15 of L7 are spherical surfaces. For a calculation rule of a value of the aspheric coefficient in Table 14, refer to the calculation rule in Table 2.

For effect that can be implemented by the zoom lens in the fifth embodiment of this application, refer to the following Table 15.

**Table 15 Achievable effect of a zoom lens**

| | Optical parameter |
|---|---|
| Focal length f | 11.5 mm to 29 mm |
| F value | 2.93 to 5.5 |
| Image height IMH | 3 mm |
| TTL | 31.9 mm |
| Design wavelength | 650 mn, 610 nm, 555 nm, 510 nm, and 470 nm |

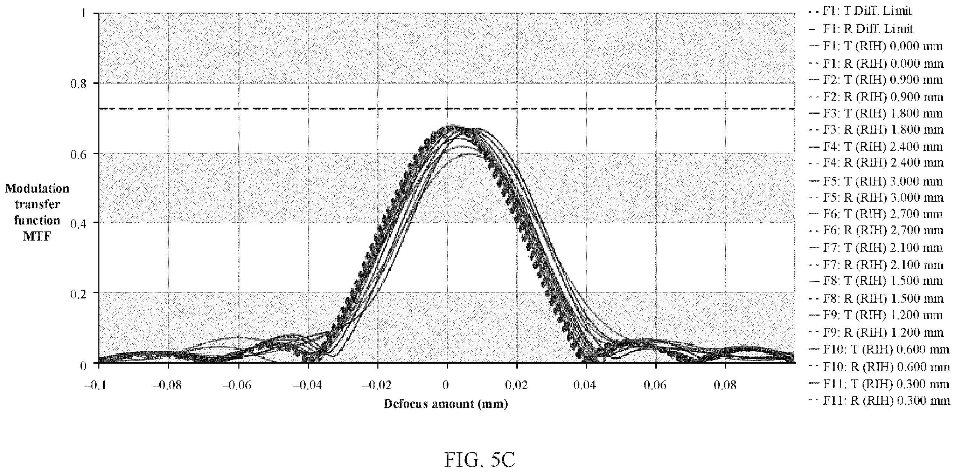

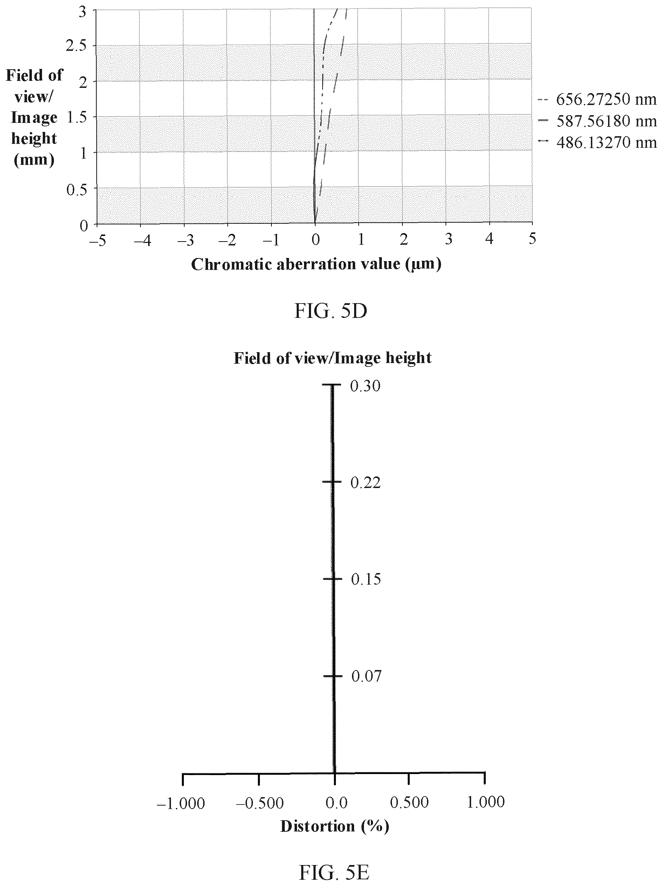

Refer to FIG. 5C, FIG. 5D, and FIG. 5E. The following uses an example in which a zoom lens is at a wide-angle end to describe a defocus amount, a transverse chromatic aberration value, and distortion. A defocus curve, a transverse chromatic aberration curve, and distortion of the zoom lens at a telescopic end are similar to those of the zoom lens at the wide-angle end.

FIG. 5C is a defocus curve diagram of the zoom lens at the wide-angle end shown in FIG. 5A. As shown in FIG. 5C, a horizontal coordinate is a defocus amount, and a vertical coordinate is a value of a modulation transfer function (modulation transfer function, MTF), and a unit is lp/mm (line pairs per mm). It can be learned from simulation results of imaging quality (125 lp/mm) in different fields of view shown by defocus curves that, when the defocus amount is 0, most MTF values in a T direction and an R direction are above 0.6, where the R direction is a direction along a radius of curvature.

FIG. 5D is a transverse chromatic aberration curve diagram of the zoom lens at the wide-angle end shown in FIG. 5A. As shown in FIG. 5D, a horizontal coordinate is a chromatic aberration value, and a vertical coordinate is a field of view/an image height. For example, color light of wavelengths 650 nm, 555 nm, and 470 nm is shown. It can be learned from FIG. 5D that a chromatic aberration value of light at different wavelengths is relatively small.

FIG. 5E is a distortion curve diagram of the zoom lens at the wide-angle end shown in FIG. 5A. As shown in FIG. 5E, a horizontal coordinate is distortion, and a vertical coordinate is a field of view/an image height, indicating a difference between an imaging deformation and an ideal shape. In FIG. 5E, because the distortion is relatively small, a distortion curve basically coincides with the vertical coordinate, so that the distortion of the zoom lens at the wide-angle end may be controlled within 5%.

In conclusion, in this embodiment of this application, in the first lens group G1, the second lens group G2, and the third lens group G3: A total quantity of lenses having focal power is M. M is an integer less than or equal to 7. In other words, the zoom lens includes a maximum of seven lenses. Therefore, the zoom lens has a maximum of $7 \times 2 = 14$ surfaces. A total quantity N of lens surfaces of aspheric surfaces may be an integer greater than or equal to 8. Because a quantity M of lenses included in the three lens groups is relatively small, a zoom lens structure is simple. This helps implement miniaturization and thinness, and can reduce costs. In addition, the zoom lens may use an 1-cut lens (a vertical height may be, for example, less than 6 mm), to reduce a height of a lens module, thereby helping implement miniaturization. For example, a diameter of the first lens may be less than 9 mm. The first lens is applicable to a miniaturized lens such as in a mobile phone, and can implement continuous zoom inside the miniaturized lens.

A value range of the ratio TTL/ft of the total track length TTL of the zoom lens to the focal length ft of the telescopic end of the zoom lens may be $0.8 \leq TTL/ft \leq 1.2$. Specifically, the TTL/ft may be one of 0.8, 0.9, 1.0, 1.1, and 1.2. Certainly, another value may be selected for the TTL/ft according to an actual requirement. For example, in the first embodiment, the ratio TTL/ft of the total track length TTL of the zoom lens to the focal length ft of the telescopic end of the zoom lens may be 0.981. In the second embodiment, the ratio TTL/ft of the total track length TTL of the zoom lens to the focal length ft of the telescopic end of the zoom lens may be 1.004. In the third embodiment, the ratio TTL/ft of the total track length TTL of the zoom lens to the focal length ft of the telescopic end of the zoom lens may be 1.02. In the fourth embodiment, the ratio TTL/ft of the total track length TTL of the zoom lens to the focal length ft of the telescopic end of the zoom lens may be 1.164. In the fifth embodiment, the ratio TTL/ft of the total track length TTL of the zoom lens to the focal length ft of the telescopic end of the zoom lens may be 1.1.

A value range of the ratio IH/ft of the maximum image height IH of the zoom lens to the focal length ft of the telescopic end of the zoom lens may be $0.02 \leq IH/ft \leq 0.2$. Specifically, IH/ft may be one of 0.02, 0.05, 0.1, 0.15, and 0.2. Certainly, another value may be selected for the IH/ft according to an actual requirement. For example, in the first embodiment, the ratio IH/ft of the maximum image height IH of the zoom lens to the focal length ft of the telescopic end of the zoom lens may be 0.107. In the second embodiment, the ratio IH/ft of the maximum image height IH of the zoom lens to the focal length ft of the telescopic end of the zoom lens may be 0.1. In the third embodiment, the ratio IH/ft of the maximum image height IH of the zoom lens to the focal length ft of the telescopic end of the zoom lens may be 0.12. In the fourth embodiment, the ratio IH/ft of the maximum image height IH of the zoom lens to the focal length ft of the telescopic end of the zoom lens may be 0.12. In the fifth embodiment, the ratio IH/ft of the maximum image height IH of the zoom lens to the focal length ft of the telescopic end of the zoom lens may be 0.103.

Finally, it should be noted that the foregoing embodiments are merely intended for describing the technical solutions of this application, but not for limiting this application. Although this application is described in detail with reference to the foregoing embodiments, a person of ordinary skill in the art should understand that they may still make modifications to the technical solutions described in the foregoing embodiments or make equivalent replacements to some technical features thereof, without departing from the scope of the technical solutions of embodiments of this application.

**Claims**

1.  A zoom lens, comprising a first lens group (G1), a second lens group (G2), and a third lens group (G3) that are sequentially arranged along an optical axis in a direction from an object side to an image side, wherein

    the first lens group (G1) and the third lens group (G3) have negative focal power, and the second lens group (G2) has positive focal power;
    the first lens group (G1) is a fixed group, the second lens group (G2) is a zoom group that is capable of moving between a first end and a second end along the optical axis, the first end is close to the object side, the second end is close to the image side, the second lens group (G2) moves from the first end to the second end, to implement optical zoom of the zoom lens from a telescopic end to a wide-angle end, the third lens group (G3) is a compensation group that is capable of moving along the optical axis, and the compensation group is configured to compensate for an offset of an image plane location, to maintain clear imaging; and
    the first lens group (G1) and the third lens group (G3) each comprise at least one lens; the second lens group (G2) comprises at least two lenses, at least one of the two lenses has negative focal power, an Abbe number of the lens having the negative focal power in the second lens group (G2) is V, $V \leq 40$, each lens comprises two opposite surfaces, at least one of the two surfaces is a lens surface, and the lens surface is a curved surface that is convex or concave in an extension direction of the optical axis of the zoom lens; and in the first lens group (G1), the second lens group (G2), and the third lens group (G3), a total quantity of lenses having focal power is M, a total quantity of lens surfaces of aspheric surfaces is N, M is an integer less than or equal to 7, and N is an integer greater than or equal to 8.

2.  The zoom lens according to claim 1, wherein the zoom lens further comprises a stop, and the stop is located between the second lens group (G2) and the third lens group (G3).

3.  The zoom lens according to claim 1 or 2, wherein a focal length of the second lens group (G2) is f2, a focal length of the telescopic end of the zoom lens is ft, and $0.10 \leq |f2/ft| \leq 0.5$ is satisfied.

4.  The zoom lens according to any one of claims 1 to 3, wherein a focal length of the third lens group (G3) is f3, the focal length of the telescopic end of the zoom lens is ft, and $0.10 \leq |f3/ft| \leq 0.5$ is satisfied.

5.  The zoom lens according to any one of claims 1 to 4, wherein a value range of a ratio TTL/ft of the total track length TTL of the zoom lens to the focal length ft of the telescopic end of the zoom lens is $0.8 \leq TTL/ft \leq 1.2$.

6.  The zoom lens according to any one of claims 1 to 5, wherein a value range of a ratio IH/ft of a maximum image height IH of the zoom lens to the focal length ft of the telescopic end of the zoom lens is $0.02 \leq IH/ft \leq 0.2$.

7.  The zoom lens according to any one of claims 1 to 6, wherein the first lens group (G1) comprises a first lens (L1) and a second lens (L2), the second lens group (G2) comprises a third lens (L3) and a fourth lens (L4), the third lens group (G3) comprises a fifth lens (L5) and a sixth lens (L6), and M = 6;

    the first lens (L1), the third lens (L3), and the fifth lens (L5) have positive focal power, and the second lens (L2), the fourth lens (L4), and the sixth lens (L6) have negative focal power; and

lens surfaces of the first lens (L1), the third lens (L3), the fourth lens (L4), the fifth lens (L5), and the sixth lens (L6) are aspheric surfaces, N = 10, and a value range of an aperture value F# of the zoom lens is $2.8 \leq F\# \leq 5$.

8. The zoom lens according to any one of claims 1 to 6, wherein the first lens group (G1) comprises a first lens (L1), the second lens group (G2) comprises a second lens (L2) and a third lens (L3), the third lens group (G3) comprises a fourth lens (L4) and a fifth lens (L5), and M = 5;

the first lens (L1), the third lens (L3), and the fifth lens (L5) have negative focal power, and the second lens (L2) and the fourth lens (L4) have positive focal power; and
lens surfaces of the second lens (L2), the third lens (L3), the fourth lens (L4), and the fifth lens (L5) are aspheric surfaces, N = 8, and a value range of an aperture value F# of the zoom lens is $2.8 \leq F\# \leq 5$.

9. The zoom lens according to any one of claims 1 to 6, wherein the first lens group (G1) comprises a first lens (L1) and a second lens (L2), the second lens group (G2) comprises a third lens (L3) and a fourth lens (L4), the third lens group (G3) comprises a fifth lens (L5), and M = 5;

the first lens (L1) and the third lens (L3) have positive focal power, and the second lens (L2), the fourth lens (L4), and the fifth lens (L5) have negative focal power; and
lens surfaces of the first lens (L1), the third lens (L3), the fourth lens (L4), and the fifth lens (L5) are aspheric surfaces, N = 8, and a value range of an aperture value F# of the zoom lens is $3.5 \leq F\# \leq 5.75$.

10. The zoom lens according to any one of claims 1 to 6, wherein the first lens group (G1) comprises a first lens (L1) and a second lens (L2), the second lens group (G2) comprises a third lens (L3) and a fourth lens (L4), the third lens group (G3) comprises a fifth lens (L5), a sixth lens (L6), and a seventh lens (L7), and M = 7;

the first lens (L1), the third lens (L3), the fifth lens (L5), and the seventh lens (L7) have positive focal power, and the second lens (L2), the fourth lens (L4), and the sixth lens (L6) have negative focal power; and
lens surfaces of the first lens (L1), the third lens (L3), the fourth lens (L4), the fifth lens (L5), and the sixth lens (L6) are aspheric surfaces, N = 10, and a value range of an aperture value F# of the zoom lens is $2.93 \leq F\# \leq 5.5$.

11. The zoom lens according to any one of claims 1 to 10, wherein the lenses in the zoom lens are symmetrical along a first axis of symmetry and a second axis of symmetry separately, the first axis of symmetry is perpendicular to the second axis of symmetry, and a maximum size of the lens in the zoom lens in an extension direction of the first axis of symmetry is less than a maximum size in an extension direction of the second axis of symmetry.

12. A camera module, comprising a photosensitive element and the zoom lens according to any one of claims 1 to 11, wherein the photosensitive element is located on an image side of the zoom lens, the zoom lens is configured to receive light reflected by a photographed object and cast the light to the photosensitive element, and the photosensitive element is configured to convert the light into an image signal.

13. The camera module according to claim 12, wherein the camera module further comprises a prism or a reflector, configured to change a direction of an optical path, so that light passing through the prism or the reflector is capable of propagating in an extension direction of an optical axis of the zoom lens.

14. An electronic device, comprising a driver chip and the camera module according to claim 12 or 13, wherein the driver chip is configured to drive the camera module.

FIG. 1A

FIG. 1B

FIG. 1C

FIG. 1D

FIG. 1E

FIG. 2A

FIG. 2B

FIG. 2C

-- 656.27250 nm
— 587.56180 nm
-- 486.13270 nm

FIG. 2D

FIG. 2E

FIG. 3A

FIG. 3B

FIG. 3C

EP 4 386 464 A1

FIG. 3D

FIG. 3E

FIG. 4A

FIG. 4B

FIG. 4C

FIG. 4D

FIG. 4E

FIG. 5A

FIG. 5B

FIG. 5C

FIG. 5D

FIG. 5E

## INTERNATIONAL SEARCH REPORT

International application No.

**PCT/CN2022/121289**

### A. CLASSIFICATION OF SUBJECT MATTER

G02B 15/177(2006.01)i; G03B 30/00(2021.01)i; H04N 5/225(2006.01)i

According to International Patent Classification (IPC) or to both national classification and IPC

### B. FIELDS SEARCHED

Minimum documentation searched (classification system followed by classification symbols)

G02B; G03B; H04N

Documentation searched other than minimum documentation to the extent that such documents are included in the fields searched

Electronic data base consulted during the international search (name of data base and, where practicable, search terms used)

CNTXT; CNABS; CNKI; VEN; USTXT; WOTXT; EPTXT: 补偿, 变焦, 固定, 第八透镜, 变倍, 广角, 望远, 凹, 凸, 正, 负, 第三透镜组, compensat+, zoom, fixed, group, eighth, lens, wide, angle, focal, concave, convex, positive, negative, third

### C. DOCUMENTS CONSIDERED TO BE RELEVANT

| Category* | Citation of document, with indication, where appropriate, of the relevant passages | Relevant to claim No. |
|---|---|---|
| X | CN 113156633 A (ZHEJIANG SUNNY OPTICS CO., LTD.) 23 July 2021 (2021-07-23) description, paragraphs [0087]-[0125], and figures 1-3 | 1-3, 6, 11-14 |
| A | CN 112731636 A (ZHONGSHAN UNION OPTOELECTRONICS RESEARCH INSTITUTE CO., LTD.) 30 April 2021 (2021-04-30) entire document | 1-14 |
| A | CN 108693634 A (XI'AN INSTITUTE OF OPTICS AND PRECISION MECHANICS, CHINESE ACADEMY OF SCIENCES) 23 October 2018 (2018-10-23) entire document | 1-14 |
| A | US 6151171 A (EASTMAN KODAK CO.) 21 November 2000 (2000-11-21) entire document | 1-14 |
| A | US 2012127588 A1 (LIN SHIMU et al.) 24 May 2012 (2012-05-24) entire document | 1-14 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **14 November 2022** | **29 November 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.

**PCT/CN2022/121289**

| Patent document cited in search report | | | Publication date (day/month/year) | Patent family member(s) | | | Publication date (day/month/year) |
|---|---|---|---|---|---|---|---|
| CN | 113156633 | A | 23 July 2021 | CN | 214751078 | U | 16 November 2021 |
| CN | 112731636 | A | 30 April 2021 | CN | 213659084 | U | 09 July 2021 |
| CN | 108693634 | A | 23 October 2018 | CN | 108693634 | B | 28 February 2020 |
| US | 6151171 | A | 21 November 2000 | JP | 2000292676 | A | 20 October 2000 |
| US | 2012127588 | A1 | 24 May 2012 | US | 8218244 | B2 | 10 July 2012 |

Form PCT/ISA/210 (patent family annex) (January 2015)

**EP 4 386 464 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111161927X